# EUROPEAN PATENT SPECIFICATION

(11) **EP 3 255 174 B1**
(45) Date of publication and mention of the grant of the patent: **11.03.2020**
(21) Application number: 16200276.0
(22) Date of filing: 23.11.2016
(51) Int. Cl.: C23C 18/18, C09D 5/24, C09D 11/322, C09D 11/52, C23C 18/20, C23C 18/30, C09D 7/41, C09D 7/61, C09D 7/63, C09D 7/40, B82Y 30/00, C08K 3/08, C08K 3/20, C08K 5/3415

(54) **COMPOSITION FOR PREPARATION OF PLATING BASE AND THIN FILM FOR PLATING BASE**
ZUSAMMENSETZUNG ZUR HERSTELLUNG EINER PLATTIERUNGSBASIS UND DÜNNSCHICHT FÜR PLATTIERUNGSBASIS
COMPOSITION DE PRÉPARATION DE BASE DE PLACAGE ET COUCHE MINCE POUR BASE DE PLACAGE

(30) Priority: 10.06.2016 JP 2016116495
(43) Date of publication of application: 13.12.2017
(73) Proprietor: Colloidal Ink Co. Ltd., Okayama 719-1121 (JP)
(72) Inventor: KANEHARA, Masayuki, Okayama 719-1121 (JP); KASHIZAKI, Kei, Okayama 719-1121 (JP)
(74) Representative: dompatent von Kreisler Selting Werner - Partnerschaft von Patent- und Rechtsanwälten mbB

(56) References cited:
- JP-A- 2014 145 041
- US-A1- 2013 001 479
- APPLEBY-HOUGHHAM G ET AL: "Precatalyzed Epoxy Formulations for Electroless Plating", IP.COM JOURNAL, IP.COM INC., WEST HENRIETTA, NY, US, October 1988 (1988-10), XP013047872, ISSN: 1533-0001
- S.-P Chen ET AL: "JSS FOCUS ISSUE ON PRINTABLE FUNCTIONAL MATERIALS FOR ELECTRONICS AND ENERGY APPLICATIONS Inkjet Printed Conductive Tracks for Printed Electronics", ECS Journal of Solid State Science and Technology, 6 February 2015 (2015-02-06), pages 3026-3033, XP055383033, DOI: 10.1149/2.0061504jss] Retrieved from the Internet: URL:http://jss.ecsdl.org/content/4/4/P3026 .full.pdf [retrieved on 2017-06-20]
- RENLIANG XU ET AL: "Comparison of sizing small particles using different technologies", POWDER TECHNOLOGY, ELSEVIER SEQUOIA, LAUSANNE, CH, vol. 132, no. 2-3, 24 June 2003 (2003-06-24), pages 145-153, XP002711749, ISSN: 0032-5910, DOI: 10.1016/S0032-5910(03)00048-2

## Description

### Field of The Invention

The present invention relates to a composition for preparation of electrolytic plating base and electroless plating base and a plating base prepared with the composition thereof.

### Related Art

Generally, in order to apply metal plating such as electroless copper plating onto a nonconductive substrate, including a resin substrate made of, for example, a thermo-setting resin such as a glass epoxy resin, epoxy resin, polyimide resin, phenol resin, urethane resin or silicone resin, or a thermoplastic resin such as a polycarbonate resin or acrylic resin, and a ceramic substrate, first, a specific metal such as palladium, silver, platinum or copper is attached onto the substrate such that the metal acts as a catalyst nucleus, thereafter, by using an electroless copper plating solution, a metal coating film such as a copper film is deposited on the substrate through the catalyst nuclei.

For example, a manufacturing method of a conductive film is disclosed where a solution including copper nanoparticles, a dispersing agent, and a solvent is used to deposit a film containing a plurality of the copper nanoparticles on a substrate, and then the film is exposed to light to make the exposed part electrically conductive (JP 2010-528428 A). It is also disclosed that when the particle size of copper nanoparticles is reduced to 250 nm or less, a homogeneous copper coating film can be formed on a substrate by stabilizing the dispersion liquid, and then performing pretreatment and electroless plating treatment (JP 2013-127110 A).

Moreover, an invention is disclosed which has an insulating substrate, a first conductive layer laminated on the insulating substrate, and a second conductive layer further laminated on the first conductive layer, wherein the first conductive layer is composed of a metal layer formed by metal particles fixed to the substrate by thermal treatment for a conductive ink including the metal particles, and an electroless metal plating layer filled in surface-communication gaps of the metal layer by electroless metal plating, and the second conductive layer is composed as a plating layer by electroplating (JP 2014-187403 A).

Furthermore, a technology is disclosed in which (1) a substrate is subjected to a cationization process using an aqueous solution of polyallylamine hydrochloride or the like, and (2) subjected to an anionization process using an aqueous solution of polyacrylic acid or the like, and then, (3) an aqueous dispersion of silver-containing structures is used to attach the silver-containing structures to the substrate, and (4) an electroless copper plating solution is used to provide an electroless plating coating film (JP 2012-255182 A). Removal of organic substances by thermal treatment is not required in this technology, but these steps are complicated, and its productivity is low.

Further, as to a composition for forming an electroless plating base layer which is excellent in adhesiveness to a surface of a substrate of a printed circuit board and to a metal coating film, can selectively form a base layer on the surface of the substrate, and can reduce the load to the environment, a composition for forming an electroless plating base layer is proposed which contains (A) at least one selected from metal powders and metal oxide powders, (B) a binder resin, and (C) a compound that has capturing ability against at least one selected from metals and metal ions, wherein, when the composition for forming an electroless plating base layer is 100 mass %, the content of (A) component is 80 to 95 mass %, the content of (B) component is 3 to 19 mass % and the content of (C) component is 0.1 to 5 mass % (JP 2015-229788 A). Here, the compound having capturing ability is at least one selected from silane coupling agents and carboxylic acid compounds. The composition is applied to an alumina substrate and dried at 150 °C for 10 minutes to form a base layer, thereafter, immersed in sulfuric acid for activation, and a palladium catalyst is added to complete the base layer. Furthermore, a silver paste composition is described which may be usable as a conductive adhesive for a plating base (JP 2014-51590 A).

JP 2014 145041 discloses a conductive ink comprising a dispersant, conductive particles which are particles having conductivity, and a solvent, in which OCAN, OTAN, or OTAP, which are organic pigment molecules, is used as the dispersant. The conductive particles are at least one selected from conductive carbon black or carbon nanotubes, or gold, silver, copper, palladium, rhodium, platinum, ruthenium, indium, nickel, iron, or cobalt.

US2013/001479 A1 **discloses a nanoink composition comprising inorganic nanoparticles (1) and an organic pi-conjugated ligand (3), and characterized in that the organic pi-conjugated ligand (3) is bound to the inorganic nanoparticles (1) via pi-conjugation to exhibit electrical conductivity.**

### Summary of The Invention

However, even if a plating base layer can be formed as mentioned above, it is necessary to conduct a pretreatment of a substrate including complicated processes such as a heat treatment or activation of a catalyst by laser irradiation before the plating process. For example, it is believed that removal of organic substances can improve adhesiveness between a plating base and a substrate and activate metal or the like serving as a catalyst contained in the plating base. It is also believed that the laser irradiation has a similar performance. And it is also believed that the complicated processes are similarly necessary to assure improvement of the adhesiveness to the substrate and catalysis activity. And, on the other hand, there may be a disadvantage of providing a damage to the substrate by performing the pretreatment for such catalyst activation. Then, the adhesiveness to the substrate and the catalysis activity are concerned if such pretreatment is not conducted. For example, if the electroless copper plating process is conducted right after the pretreatment process in which copper nanoparticles are attached to the substrate only by immersing the substrate into the pretreatment liquid without drying or rinsing it with deionized water followed by a drying process, it is concerned that the amount of attached copper nanoparticles and/or the power of adhesion thereof may be insufficient. And if a conventional silver paste composition is employed, it is believed that an electrical resistivity of a base layer thereof is to be lowered since resin therein surrounds silver particles that has a porous body having open communicating pores. However, the size of the silver particles is relatively large and the composition contains a hardening agent and it is required to keep a certain level of elasticity such that it is not suitable for making a thin and homogeneous plating base.

Thus, a plating base layer for plating is provided which can be easily formed on a substrate without removal of organic substances by a heat treatment or without treating the substrate through complicated processes.

That is, a composition for forming the plating base is provided in which particles of metal, semiconductor substance, and/or metal oxide are contained and, after the composition is applied onto the substrate such that solvent or dispersing medium (hereinafter collectively referred to as "solvent or the like") is permeated into the substrate and/or evaporates such that the amount of solvent or the like becomes so little, the particles of metal, semiconductor substance, and/or metal oxide are to be in an active state and a thing applied thereon (hereinafter referred to as "coating film") has a sufficient adhesive force to the substrate. Then, the plating base is also provided which is formed from the composition. And a method of forming the plating base with the composition is also provided.

Such a composition may include: (A) at least one or two or more kinds of particles selected from metal, semiconductor substance, and metal oxide; (B) an organic pi conjugated ligand such as phthalocyanine and/or naphthalocyanine, which may have a polar substituent group; and (C) an aqueous or water-soluble solvent and/or dispersing medium wherein the composition may have electrical conductivity when the amount of the solvent and/or dispersing medium is so little because of vaporization and the like such that the above-mentioned particles are so close to each other. And a plating base can be formed which includes a coating film that exhibits electrical conductivity by applying and drying such a composition onto a substrate (to form a desired pattern, for example). Further, the composition for forming the plating base may include (D) a binder resin such as polyvinylpyrrolidone (PVP). The above-mentioned organic pi conjugated ligand may include at least one kind of TCAP, TCANand OCAP, for example. Here, TCAP represents 2,11,20,29-tetrakis (carboxy) phthalocyanine. TCAN represents 2,11,20,29- tetrakis (carboxy) naphthalocyanine. OCAP represents 2,3,11,12,20,21,29,30-Octakis (carboxy) phthalocyanine.. A plating base may be formed by applying and drying a metal nanoparticle dispersion liquid or a metal nanoparticle dispersion ink in which metal nanoparticles are protected by dye molecules having a phthalocyanine skeleton and a metal film may be further formed by, for example, applying electroless plating.

Specifically, the invention provides the following.
(1) A composition for forming a plating base, comprising: (A) inorganic nanoparticles that are made of at least one or two or more kinds of substances selected from a group consisting of metal, semiconductor substance, and metal oxide wherein the inorganic nanoparticles have an average particle diameter of 1 nm to 500 nm as measured according to a method of JIS H7804:2005 or JIS Z 8827-1:2008; (B) at least one or two or more kinds of organic pi conjugated ligands which include at least one selected from a group consisting of 2,11,20,29-tetrakis (carboxy) phthalocyanine (TCAP), 2,11,20,29-tetrakis (carboxy) naphthalocyanine(TCAN), and 2,3,11,12,20,21,29,30-Octakis (carboxy) phthalocyanine (OCAP); and (C) an aqueous or water-soluble solvent and/or dispersing medium wherein a residue of the composition exhibits electronic conductivity due to substantial loss of the aqueous or water-soluble solvent and/or dispersing medium from the composition.
(2) The composition for forming the plating base according to the above (1) wherein the composition may further include (D) a binder resin.
(3) The composition for forming the plating base according to any one of the above (1) or (2) wherein the inorganic nanoparticles may include at least one kind of element or metal alloy or a compound formed of at least one kind of element and/or metal alloy selected from a group consisting of Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, and At.
(4) The composition for forming the plating base according to any one of the above (1) to (3) wherein the aqueous or water-soluble solvent and/or dispersing medium may include at least one selected from a group consisting of water, and an organic solvent that is miscible in water.
(5) The composition for forming the plating base according to the above (2) wherein the binder resin may include at least one or two or more kinds selected from a group consisting of acrylic resin, polyester, polyurethane polyethylene resin, polypropylene, polystyrene, polyvinylpyrrolidone, polyethylene glycol, polyamide, polyepoxy, polyvinyl alcohol, polysaccharides, and protein.
(6) A thin film for a plating base which is attached to a predetermined substrate wherein the film includes (A) inorganic nanoparticles that may be made of at least one or two or more kinds of substances selected from a group consisting of metal, semiconductor substance, and metal oxide wherein the inorganic nanoparticles have an average particle diameter of 1 nm to 500 nm as measured according to a method of JIS H7804:2005 or JIS Z 8827-1:2008; and (B) at least one or two or more kinds of organic pi conjugated ligands which includes at least one selected from a group consisting of 2,11,20,29-tetrakis (carboxy) phthalocyanine (TCAP), 2,11,20,29-tetrakis (carboxy) naphthalocyanine(TCAN), and 2,3,11,12,20,21,29,30-Octakis (carboxy) phthalocyanine (OCAP), and wherein the inorganic nanoparticles and the organic pi conjugated ligands are substantially in a homogeneously mixed state in the film.
(7) The thin film for the plating base according to the above (6) wherein the thin film may include the aqueous or water-soluble solvent and/or dispersing medium at most to an extent such that the thin film may be recognized as a solid body and exhibit electrical conductivity.
(8) The thin film for the plating base according to the above (6) or (7) wherein the thin film may further include (D) a binder resin.
(9) The thin film for the plating base according to any one of the above (6) to (8) wherein the inorganic nanoparticles may include at least one kind of element or a metal alloy or a compound formed of at least one kind of element and/or metal alloy selected from a group consisting of Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, and At.
(10) The thin film for the plating base according to any one of the above (7) to (9) wherein the aqueous or water-soluble solvent and/or dispersing medium may include at least one selected from a group consisting of water, and an organic solvent that is miscible in water.
(11) The thin film for the plating base according to any one of the above (8) wherein the binder resin may include at least one or two or more kinds selected from a group consisting of acrylic resin, polyester, polyurethane polyethylene resin, polypropylene, polystyrene, polyvinylpyrrolidone, polyethylene glycol, polyamide, polyepoxy, polyvinyl alcohol, polysaccharides, and protein.
(12) The thin film for the plating base according to any one of the above (6) to (11) wherein surfaces of the inorganic nanoparticles are at least partially exposed from the outermost surface of the thin film.
(13) A method of forming a metal coating film over the thin film recited in any one of the above (6) to (12) including a step of applying electrolytic plating or electroless plating onto the thin film wherein the above-mentioned metal coating film may include at least one or two or more kinds of elements or a metal alloy and/or a compound including at least one or two or more kinds of elements, which are selected from a group consisting of copper, nickel, tin, chrome, zinc, gold, silver, platinum, rhodium, and palladium.

As the composition recited in any one of the above (1) to (6) is utilized, a thin film to serve as a plating base can be obtained by applying and drying the composition in which metal nanoparticles are dispersed wherein no activation treatment process other than the drying process is necessary.

With respect to the thin film of the above (12), the plating base has a metal surface on the outermost surface that is not covered with an organic substance. Therefore, no activation treatment is necessary.

With respect to the thin film of any one of the above (6) to (12), it may be characterized by having no cracks. It may also be characterized by having a hole.

With respect to the thin film of any one of the above (6) to (12), it may be characterized by having a hole, a diameter of which is from 0.1 µm to 5.0 µm.

With respect to the thin film of any one of the above (6) to (12), it may be characterized by having holes, a number of which is from 1x10² to 1x10⁴ per 1 cm² of the thin film.

If the thin film of any one of the above (6) to (12) is utilized as the plating base, a metal coating film can be formed by electrolytic plating or electroless plating. In the method of forming the metal coating film, a film can be formed wherein the film may include at least one or two or more kinds of elements or a metal alloy of such element or elements and/or a compound including at least one or two or more kinds of elements or metal alloys, which are selected from a group consisting of copper, nickel, tin, chrome, zinc, gold, silver, platinum, rhodium, and palladium.

Here, the inorganic nanoparticles may have electrical conductivity and such sizes and shapes that no troubles may not be caused in subsequent processes thereof such as printing and the like such as ink-jet printing and the like when they are dispersed or suspended in the solvent as the composition. The organic pi (n) conjugated ligand is preferably a ligand that can prevent at least partially direct contacts among the inorganic nanoparticles by connecting to surfaces of the inorganic nanoparticles with so-called pi (n) junction. The solvent or dispersing medium may be what can make the inorganic nanoparticles having such ligands at least partially connected (so-called, pi (n) conjugated) to the surfaces suspended or dispersed therein. In a so-called applying process such as printing and the like, a combination of the inorganic nanoparticles, the organic pi (n) conjugated ligand, and the solvent and the like is preferably selected such that a border between a processed portion and an unprocessed portion may exhibit a sharp edge. It is possible to determine whether the pi (n) junction exists or not in the coating film by vanishment of a Q band, but if an excessive amount of organic pi (n) conjugated ligand (that is, an amount of organic pi (n) conjugated ligand not connected to the inorganic nanoparticles) is included therein, part of the coating film applied thereon is removed from the substrate and stirred in a solvent or dispersing medium such that the excessive amount of organic pi (n) conjugated ligand is removed from the film and then it can be determined whether the Q band is detected or not. And the solvent or dispersing medium is preferably removed easily from the coating film by its quick permeation into the substrate and/or by its evaporation into an ambient gas such as the air. It is preferable to remove it at least partially from the coating film for example by its permeation through microscopic pores in the substrate or by its having a relatively high vapor pressure in the ambient gas. The substantial vanishment of the aqueous or water-soluble solvent and/or may mean substantial removal from the system (for example, residue) including the inorganic nanoparticles and the organic pi (n) conjugated ligands of the composition, which is caused by permeation of the solvent and/or dispersing medium into the substrate, evaporation of the solvent and/or dispersing medium into the ambient atmosphere, or others. The substantial vanishment may mean that the solvent and/or dispersing medium may be lost or removed therefrom to the extent such that the residue may be recognized as a solid substance or a solid body. It is preferable that the solvent or dispersing medium does not damage material of the substrate. To exhibit electrical conductivity may mean to have electrical conductivity and more specifically it may mean that the condition stated later in the specification of the present application is satisfied. The substantially homogeneously mixed state may mean a state in which bias cannot be recognized apparently therein. For example, it may be to such an extent that a lump in which only the nanoparticles get together cannot be recognized by the naked eye. And the above-mentioned predetermined substrate may mean a substrate that is prepared in advance and is made of any kind of substance or material. As mentioned above, it is preferable to have the substrate made of any kind of material that is difficult to be damaged by the solvent or dispersing medium and/or that is easily permeated by the solvent or dispersing medium. For example, it is preferable that a surface of the substrate is hydrophilic and is difficult to be dissolved in water. Details will be described later in the detailed description. The above-mentioned thin film may mean a film having a dimension in which length in the thickness direction is especially smaller than length of the longitudinal or traversal direction. To be especially smaller may mean that it is not more than one-tenth thereof for example. And, in particular, the lower limit is as low thickness as technically possible. Further, it is stated that substantial loss of the aqueous or water-soluble solvent and/or dispersing medium from the composition results in exhibiting electrical conductivity, which may provide another method of measuring electrical conductivity. That is, as one of the ways to obtain properties of the composition, the composition may be specified by a property that the electrical conductivity may be caused by removing substantially the solvent and the like selectively from the composition. For example, if the solvent and the like has permeability into base material of a substrate and the like and/or if the solvent and the like has high vapor pressure (for example, equal to or more than the vapor pressure of water) in a predetermined temperature and humidity in an ambient gas such as air, it is considered that the composition possesses such a property.

According to the present invention, a coating film that is obtained by applying and drying a metal nanoparticle dispersion liquid or a metal nanoparticle dispersion ink in which metal nanoparticles are protected by dye molecules having a phthalocyanine skeleton can serve as a plating base in order to have a metal film formed over the coating film even if the coating film is not treated by an additional operation such as heat sintering or catalyst imparting. And it would be easier to apply a plating process to a plastic resin product, which is difficult to be treated by the plating process so far. And a plating base obtained according to the present invention may be utilized as the plating base in various plating methods known today.

### Brief Descriptions of The Drawings

Fig. 1 shows an electroless copper plating (a light-colored part on the right side) formed on a plating base formed by applying an Ag nanoparticle dispersion ink to a glass-epoxy substrate (A dark part occupying a major area is an Ag coating film.).
Fig. 2 shows a UV-vis absorption spectrum of an Ag nanoparticle dispersion liquid.
Fig. 3 shows a UV-vis absorption spectrum of an Au nanoparticle dispersion liquid.
Fig. 4A shows TG-DTA measurement results (Ag nanoparticle dispersion liquid).
Fig. 4B shows TG-DTA measurement results (Au nanoparticle dispersion liquid).
Fig. 4C shows TG-DTA measurement results (Ag nanoparticle dispersion liquid with addition of resin).
Fig. 4D shows TG-DTA measurement results (Au nanoparticle dispersion liquid with addition of resin).
Fig. 5A shows a result of a laser Raman spectroscopy measured on a coating film surface of Example 1 (prior to plating treatment).
Fig. 5B shows a result of a laser Raman spectroscopy measured for Synthesized example 1.
Fig. 6A shows an optical photomicrograph of surface of plating base of manufactured examples 1-3.
Fig. 6B shows an optical photomicrograph of surface of plating base of manufactured examples 4-5.
Fig. 6C shows an optical photomicrograph of surface of plating base of manufactured examples 6-7.
Fig. 7A shows an optical photomicrograph of surface of plating base of manufactured examples 8.
Fig. 7B shows an optical photomicrograph of surface of plating base of manufactured examples 9.
Fig. 7C shows an optical photomicrograph of surface of plating base of manufactured examples 10.
Fig. 8A shows an optical photomicrograph of surface of plating base of manufactured examples 11-12.
Fig. 8B shows an optical photomicrograph of surface of plating base of manufactured examples 13-14.
Fig. 8C shows an optical photomicrograph of surface of plating base of manufactured examples 15-16.
Fig. 9A shows an optical photomicrograph of surface of plating base of manufactured examples 17-18.
Fig. 9B shows an optical photomicrograph of surface of plating base of manufactured examples 19-20.
Fig. 9C shows an optical photomicrograph of surface of plating base of manufactured examples 21-22.
Fig. 10A shows an optical photomicrograph of surface of plating base of manufactured examples 23-24.
Fig. 10B shows an optical photomicrograph of surface of plating base of manufactured examples 25-26.
Fig. 10C shows an optical photomicrograph of surface of plating base of manufactured examples 27-28.

### Detailed Description of The Preferred Embodiment

In the following embodiments, the following terms are used.

### (Plating)

Plating has been known for a long time as a method for obtaining a metal coating film. The method of obtaining a coating metal by utilizing electric reduction may be called electrolytic plating and the method utilizing chemical reduction may be called electroless plating. Further, many kinds of plating liquids and plating methods are known to be selected depending on constituents of the metal coating film. The plating base according to the present invention can be used in any of the above-mentioned methods.

### (Pretreatment prior to plating)

It is preferable to conduct an activation treatment on the place where a plating coating film is formed as a normal pretreatment along with the electroless plating. The activation treatment is aimed to remove an oxide film with acid if the surface to which coating film is attached is metal and to impart and activate catalyst for plating that mainly includes noble metal if the surface to which coating film is attached is non-metal.

The above-mentioned activation treatment may be conducted in order to cause metal ions to be easily reduced chemically or electrochemically on a surface where plating is conducted and enhance the adhesiveness and the coatability of metal attached thereto by plating. For example, in the case where the catalyst is utilized, it is to remove contaminants and the like from a catalyst surface which is covered with organic substance contamination so as to activate the catalyst surface such that metal ions may be easily reduced by reduction reaction. Further, in the case where reduction is conducted electrically, it is to remove an oxide film, organic substance contamination, and the like on the surface which metal ions contact such that electric conductivity on the surface may be enhance. For example, with respect to catalyst such as platinum and palladium placed on the plating base, it may be covered with a protecting agent including polymer and the like in order to keep stability thereof.

However, there may be a condition where metal ions to be plated chemically or electrochemically are easily reduced on the surface where such plating is made even if the above-mentioned pretreatment is not conducted. In such a case, it is not necessary to conduct the pretreatment. For example, the above-mentioned pretreatment is not necessary in the case where the plating base is formed by applying and drying the following composition. Hence, it is not necessary to be subject to a high temperature treatment as one of the typical pretreatments such that the productivity is increased as well as deterioration of the substrate may be prevented. And, the plating base formed by applying and drying the following composition as mentioned later has electric conductivity so as to be utilized as the plating base for electrolytic plating.

### (Nanoparticle metal kind)

The metal kind to constitute nanoparticles according to the present invention is not in particular limited thereto, but it may be selected as appropriate depending on the kind and the purpose of plating to be applied thereon. For example, the element to constitute the metal nanoparticles may be at least one element as a simple substance or an alloy, or a compound thereof selected from a group consisting of Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, and At. It is preferable that the nanoparticles includes a noble metal such gold, silver, and platinum; a transition metal such as nickel; or an amphoteric metal such as tin in consideration of activity at the time of plating. Here, the noble metal may include gold, silver, copper, platinum, palladium, iridium, rhodium, osmium, and ruthenium and the nanoparticles may comprise at least one or two or more kinds of metals or alloys selected from these.

### (Particle diameter)

In the present invention, the shapes of metal nanoparticles are not limited thereto in particular, and a particle diameter after spherical approximation need not be particularly limited as far as the nanoparticles disperse or dissolve properly in the composition. According to the invention, the nanoparticles have an average particle diameter of 1 nm to 500 nm as measured according to a method of JIS H7804:2005 or JIS Z 8827-1:2008. When stable dispersibility in a solvent or the like is taken into consideration, an average particle diameter of 500 nm or less is preferable. Further, the average particle diameter of 250 nm or less is also preferable. Moreover, the average particle diameter is also preferably 200 nm or less, and more preferably 50 nm or less. On the other hand, when ease of a manufacturing method or the like is considered, the average particle diameter is preferably 1 nm or more. In terms of average particle diameter range, an average particle diameter range of 1 nm to 500 nm is in accordance with the invention, 1 nm to 100 nm is more preferable, and 1 nm to 50 nm is still more preferable. This is because, for example, when the average particle diameter is more than 500 nm, the ratio of the surface area of the particles to the weight thereof is lowered, resulting in decreased dispersibility in a solvent or the like. It is noted that the average particle diameter may be an arithmetic mean diameter, mode diameter, median diameter, geometric mean diameter, mean surface diameter, mean volume diameter, length mean diameter, surface mean diameter, and the like, which can be determined on number basis or mass basis. The average particle diameter on number basis is employed herein ( JIS H 7804: 2005 and JIS Z 8827-1: 2008).

Further, it is widely known that, metal nanoparticles of each metal species show a specific absorption spectrum corresponding to the particle diameter. This is because a frequency of irradiated light and surface charges of the metal nanoparticles interact strongly with each other. For example, it is widely known that a dispersion liquid of fine gold particles with a diameter of 20 nm has an absorption peak at about 520 nm and thus looks red, while a dispersion liquid of fine silver particles with a diameter of 30 nm has an absorption peak at about 420 nm and thus looks brown. As such, it is possible to estimate a kind and a diameter of metal nanoparticles based on the light absorption spectrum, and on the other hand, it is also possible to define a diameter of metal nanoparticles based on the light absorption spectrum and the kind of the metal contained.

### (Preferred dispersing medium)

In the present invention, a dispersing medium or the like composing a metal nanoparticle solution or dispersion liquid is preferably a polar solvent including water. For example, water alone or a mixture liquid of water and a water-miscible polar organic solvent is preferable. Polar solvents are preferable, because it is believed that the dispersibility is further secured by electrostatic repulsion between nanoparticles. Exemplary water-miscible polar solvents may include a polar solvent having SP value, which is known as a solubility parameter, of 9.5 or more. More specifically, the polar solvent includes at least one selected from methanol, ethanol, propanol, acetone, acetonitrile, dimethylacetamide, dimethylformamide, dimethylsulfoxide, dioxane, phenol, cresol, ethylene glycol, propylene glycol, butylene glycol, diethylene glycol, triethylene glycol and glycerol, or a mixture of two or more thereof.

### (Organic dispersing agent for metal nanoparticle)

Examples of dispersing agents for the metal nanoparticles composing a metal nanoparticle dispersion liquid of the present invention may include organic pi conjugated ligands including aromatic compounds having any one of phthalocyanine, naphthalocyanine and porphyrin skeleton (WO2011/114713). The organic pi conjugated ligand may have any one or more substituent groups selected from amino, mercapto, hydroxyl, carboxyl, phosphine, phosphonic acid, halogen, selenol, sulfide and selenoether. Further, the organic pi conjugated ligand may have any one or more substituent groups selected from hydroxyl, carboxyl, amino, alkylamino, amide, imide, phosphonic acid, sulfonic acid, cyano, nitro and salts thereof. According to the invention, the organic pi conjugated ligand includes any one or more of TCAP, TCANand OCAP. Here, TCAP denotes 2,11,20,29-tetrakiscarboxyphthalocyanine. TCAN denotes 2,11,20,29-tetrakiscarboxynaphthalocyanine. OCAP denotes 2,3,11,12,20,21,29,30-octakiscarboxyphthalocyanine..

### (Binder resin additive)

Binder resins, when added to a composition, can enhance the adhesiveness of the coating film formed by applying the composition to a substrate. Further, binder resins can also enhance the strength of the coating film itself after dried. Moreover, the binder resin which does not separate in a solvent or the like included in the composition (for example, does not form a precipitate) is preferable. This is because the separation from the solvent or the like results in insufficient homogeneity of the composition, which possibly leads to impaired homogeneity of the coating film.

Examples of the binder resins of the present invention may include any one of acrylic resins, polyester, polyurethane polyethylene resins, polypropylene, polystyrene, polyvinylpyrrolidone, polyethylene glycol, polyamide, polyepoxy, polyvinyl alcohols, polysaccharides and proteins, and mixtures of two or more thereof.

In addition to the above-noted binder resins, the binder resin may include binder resins with a modified chemical structure or physical shape to improve solubility. Exemplary resins having a modified chemical structure may include polyethyleneimine, polystyrene sulfonic acids, aromatic polyamide, carboxymethylcellulose, and the like. Further, exemplary resins having a modified physical shape to improve solubility may include cellulose nanofibers, chitin nanofibers, and the like.

### (Application style)

In the present invention, it is possible to obtain a coating film by applying and drying a composition in which metal nanoparticles are dissolved or dispersed, however, the method of applying is not particularly limited. In the present invention, the composition including suitable metal nanoparticles in a dissolved or dispersed state may include an aqueous solvent or the like. The content of organic components is relatively small, and typical viscosity of the composition is approximately 1 to 50 mPa·s. Accordingly, a variety of methods such as spray application, inkjet printing and flexographic printing can be employed. It is noted that the plating base may be formed by applying the composition by using an applicator, a bar coater or a blade, or a writing tool such as a pen filled with said solution, though they may be slightly unsuitable for large scale manufacture.

### (Spray application)

Here, "spray application" refers to a method to apply a solution or the like to be applied onto a substrate by generating mist of the solution and spraying the mist by using compressed air. Masking with an adhesive tape or the like enables selective application to form a particular shape.

### (Blade coating)

Here, "blade coating" refers to a method to spread, on a substrate, a solution or the like to be applied by using a blade made of rubber, metal or the like. Masking with an adhesive tape or the like enables selective application to form a particular shape.

### (Ink-jet printing)

Here, "ink-jet printing" refers to a method in which fine droplets generated by driving computer-controlled nozzles are applied onto a substrate. Several types of nozzles employing different driving methods, such as piezo system, thermal system and XAAR system are currently known widely. Drawing by using computer software or the like enables to apply the ink into an arbitrary planar shape.

### (Flexographic printing)

Here, "flexographic printing" refers to a kind of relief printing technique wherein printing is achieved by transferring ink applied on a relief printing plate onto a substrate.

### (Drying method)

In the present invention, a coating film obtained by applying and drying ink having a composition in which metal nanoparticles are dissolved or dispersed can be utilized as plating base. Drying condition is not particularly limited. For example, any of dried coating films obtained by removing a solvent or the like at an ordinary or heated temperature either under atmospheric air, inert gas atmosphere, reducing atmosphere or reduced pressure can be used as plating base. Heating the ink to 40 °C to 150 °C under atmospheric air is preferable in terms of economic rationality, because the solvent or the like to be removed is water or an aqueous liquid. The ink may also be heated to 50 °C to 95 °C under atmospheric air.

### (Coating film thickness)

In the present invention, plating base comprising a coating film obtained by applying and drying metal-dispersed ink having a composition in which a metal nanoparticles are dissolved or dispersed can be provided. A film thickness of the coating film is not limited as far as it does not cause adverse effect on the plating formed thereon. For example, the coating film thickness may be 10 µm or less. The coating film thickness may also be 5 µm or less. Further, as far as the function as plating base is sufficient, the coating film thickness is not limited and the coating film thickness may be 50 nm or more. The coating film thickness may also be 100 nm or more. In particular, when the plating base is used for electrolytic plating, the coating film thickness may be small as far as sufficient electric current is secured. The coating film thickness may be 100 nm or more. The coating film thickness may also be 200 nm or more.

### (Metal content amount in coating film)

In the present invention, the metal content in the coating film that serves as plating base is not particularly limited as far as the metal component contained in the coating film has activity which is sufficient both in quantity and quality as a whole. This is because when a large amount of inactive metal is contained, the function as plating base cannot necessarily be expected. Generally, when the metal content is low and the activation ratio of the contained metal is almost the same, the amount of active metal of the coating film decreases as a whole, and as a result, the subsequent plating may not be achieved sufficiently. For example, the metal content in the coating film may be 50 wt% or more. Further, since components other than metal are included in the coating film, the metal content is less than 100 wt%. It is noted that the metal content amount in the coating film mentioned herein refers to a weight value of the contained metal per unit coating film weight (wt/wt%).

The metal content amount in the above-mentioned coating film may be measured, for example, by TG-DTA analysis as one kind of the thermogravimetric analyses. It may be considered that the weight loss is caused by evaporation, sublimation, or thermal decomposition of the organic substances when the temperature is raised within the temperature range where the metal may not be substantially released out of the system by evaporation, sublimation, or thermal decomposition. And it goes without saying that it is also considered that the weight loss of the solvent and the like left in a sample collected from the coating film should be counted. In the present invention, with respect to the TG-DTA analysis, the weight of the sample at the temperature of 150 °C was considered to be the coating film weight in the case where the temperature was raised from the room temperature, and the residual weight of the sample at the temperature of 600 °C was considered to be a metal nanoparticle weight (or metal solid content weight) in the case where the temperature was further raised. As a concrete measurement method thereof, a measurement sample is prepared by being stripped off from the coating film formed on a glass substrate, changes in the weight and the differential heat are measured as the temperature is raised from the room temperature to 600 °C at the rate of 3.5 °C /min or 10.0 °C/min. Thus, the measurement data can be obtained.

### (Dispersing agent in coating film)

As described in WO2011/114713, in the case where dye molecules such as porphyrin, phthalocyanine, and naphthalocyanine are used as a dispersing agent of the metal nanoparticles, a strong mutual interaction may be caused among these dye molecules and the metal nanoparticles such that a peak of Q band that is a characteristic absorption spectrum of the dye molecules substantially disappears. In such a condition, other highly sensitive methods of measurement may be employed to confirm that the dye molecule such as porphyrin, phthalocyanine, and naphthalocyanine can be confirmed to exist on the metal nanoparticle surface by, for example, a laser Raman spectroscopy measurement. The laser Raman spectroscopy measurement can be conducted with a sample in a wet condition or in a dry condition and, in the case of dry condition, a coating film dried on a glass substrate can be utilized as a measurement sample.

### (Activity of surface of coating film (especially, of metal))

If the surface of the coating film serving as a plating base is active in the subsequent plating treatment, the so-called pretreatment is not necessary. If the subsequent plating treatment cannot be carried out completely or substantially, the pretreatment is necessary since the surface of the coating film is not active. For example, in the case where metal in the coating film is exposed on the outside surface of the coating film, the surface of the coating film may be active. This is because it is difficult for the metal to participate in the reaction process of the plating treatment if the metal is not exposed on the outside surface of the coating film. The method of measuring degree of exposure on the surface of the metal coating film may include, for example, a method of detecting a metal ion dissolved in dilute nitric acid that washes the surface of the coating film and an analyzing method with a spatial analyzer (for example, STEM-EELS, Aberration Corrected STEM-EDS, and so on).

### (Substrate)

In the present invention, a plating base can be obtained by applying and drying an ink comprising a composition in which metal nanoparticles are dissolved or dispersed. The substrate having a surface on which such a coating film is formed is not in particular limited thereto. For example, a substrate comprising a composite material such as a glass-epoxy; a substrate comprising one or two or more kinds of organic materials selected from a group consisting of PET resin, PEN resin, PP resin, PI resin, epoxy resin, cellulose nanofiber film, chitin nanofiber film and so on; and a substrate comprising one or two or more kinds of inorganic materials selected from a group consisting of alkali glass (soda glass), alkali-free glass (borosilicate glass glass), ITO, alumina and so on are named as examples of the substrate.

### Embodiment

### (Reagent)

In embodiments of the present invention, the following reagents were used.
Copper(II) sulfate pentahydrate; Nacalai Tesque, Inc. (Product code: 09604-85),
ethylenediaminetetraacetic acid tetrasodium salt tetrahydrate; Nacalai Tesque, Inc. (Product code: 15114-15),
2,2'-bipyridyl; Nacalai Tesque, Inc. (Product code: 14020-52),
formaldehyde solution (37%) ; Nacalai Tesque, Inc. (Product code: 16222-65),
silver nitrate; Ohura Precious Metal Industry Co., ltd (Lot No. 270728),
chlorauric acid; Tanaka Kikinzoku Kogyo K.K. (Lot No. L3000162314342),
sodium hydroxide; Nacalai Tesque, Inc. (Model No. : 31511-34),
hexaammonium heptamolybdate tetrahydrate ; Wako Pure Chemical Industries, Ltd. (Model No. : 016-06902),
4-sufophthalic Acid (ca. 50% in water); Tokyo Chemical Industry Co., Ltd.(Model No. : S0136),
urea; Nacalai Tesque, Inc. (Model No. : 35905-93),
monoethanolamine; Nacalai Tesque, Inc. (Model No. : 23405-55),
methanol ; KISHIDA CHEMICAL Co.,Ltd. (Model No. : 520-48665),
isopropanol (IPA) ; Nacalai Tesque, Inc. (Model No. : 29113-24),
hexanol ; Nacalai Tesque, Inc. (Model No. : 18013-45),
ethylene glycol ; Nacalai Tesque, Inc. (Model No. : 15209-85),
triethylene glycol dimethyl ether (triglyme) ; Nacalai Tesque, Inc. (Model No. : 34832-15),
acetone ; KISHIDA CHEMICAL Co.,Ltd. (Model No. : 170-00305), and
OLFINE PD002W : Nissin Chemical Industry Co., Ltd (Model No. : PD-002W) .
Here, as for the ion-exchanged water, pure water having the electric resistivity of 15 MΩ·cm or more, having been purified by Ultrapure Water System, Pure Water System (Model No. : KE0129) of KOMATSU ELECTRONICS CO., Ltd. was used.

### (Devices)

The used devices are as follows. In order to measure absorption spectra of examples, UV-Visible Spectrophotometer (Hitachi High-Technologies Corporation, Model No. : U-4100) was employed, and, in order to investigate thickness of coating films, a fine structure measuring device (Kosaka Laboratory Ltd. (Model No. : ET200)) was employed, and, in order to investigate metal contents in coating films, TG/DTA Simultaneous Measuring Instrument (SHIMADZU CORPORATION (Model No. : DTG-60H)) was employed, and, in order to investigate existence of phthalocyanine and derivatives thereof, a laser Raman spectrophotometer (Nanophoton Corporation (Model No. : RAMAN touch)) was employed. Further, in order to measure viscosity of solutions, a viscometer (Toki Sangyo Co., Ltd (TV-22)) was employed. Here, surface tension of solutions was measured with a capillary-rise method surface tensiometer (Surfgauge Instruments (DG-1)) was employed. Further, in order to observe particle shapes of nanoparticles, aa transmission electron microscope (Hitachi High-Technologies Corporation, Model No. : H-7500) was employed.

And, in order to conduct ejection test of inkjet inks, an inkjet printer for household use of SEIKO EPSON CORPORATION (Model No. PX-K150 and S-160T) was employed and the original ink was replaced with the metal nanoparticle dispersion liquid, which was loaded thereinto.

### (Substrate)

Substrates on which coating films of plating base were formed were used as shown below.
Glass substrate: made by Matsunami Glass Ind., Ltd. (Model No.: S9115),
Glass epoxy substrate: MISUMI Corporation (Model No.: EPXA-60-24-2),
PET film (1): (Teijin® Tetoron® Film): Teijin DuPont Films Japan Limited (Model No. G2P2), and
PET film (2): (TORAY® Lumirror®): Toray Industries, Inc. (Model No. T-60).

### Synthesized example 1

### (Synthesis of phthalocyaninetetracarboxylic acid)

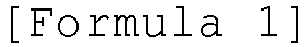

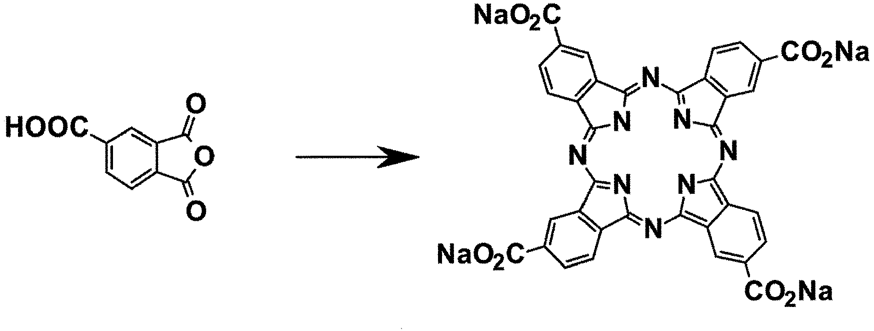

The synthesis of phthalocyanine-4,4',4",4"' tetracarboxylic acid (hereinafter referred to as TCAP) was conducted with reference to the method for the synthesis by Fukada et al. (The Journal of the Society of Chemical Industry, Japan Vol. 64(1961) No. 10, pp.1817-1819 and US Patent No. 4,522,755). Here, it is necessary to pay sufficient attention such that the container pressure might not be increased too much since the present reaction is accompanied by generation of carbon dioxide gas and ammonium carbonate.

That is, 41.8 g (217.5 mmol) of trimellitic anhydride, 145 g of urea, 11.5 g of ammonium molybdate were input into one-litter of reaction container in which a magnetic stirrer was placed and then 220 ml of tryglyme was further added thereto and the ambient gas was replaced with nitrogen gas. The above-mentioned suspension liquid was heated to 140 °C while the liquid was stirred, and then, solid content therein started to become more viscous. After the liquid was continued to be stirred for one hour at this temperature, the reaction temperature was raised to 210 °C and green solid substance started to be generated while bubbles were also generated. After the liquid was continued to be heated at 210 °C for two hours, the heating was stopped and the reaction system was cooled down to the room temperature.

After a small amount of formic acid was added to ammonium carbonate left in the container such that the ammonium carbonate was dissolved, green solid bodies were crushed into small pieces for the purpose of wash. The green solid bodies were suspended in methanol and centrifugal separation was conducted and supernatant was removed. The process was repeated twice such that tryglyme was removed as much as possible.

Then, the thus-obtained solid bodies were stirred in 300 ml of 3 wt% sodium hydroxide solution and were refluxed for one hour such that amido was hydrolyzed to become carboxylic acid. Here, 650 ml of IPA was added thereto so as to make precipitation therein such that green solid bodies were obtained by centrifugal separation. After the green solid bodies were centrifuge refined with acetone, methanol, and acetone in this order, respectively, the solid bodies were dried with a vacuum pump overnight such that 32.08 g of TCAP (77.5 % of gross yield as tetrasodium salt) was obtained. Similarly for the compounds to be described later, it was considered that β position substitution products derived from impurities of the raw materials should be included, but the present compounds were used as a dispersing agent for metal nanoparticles without any additional refinement.

### Example 1

### (Preparation of Ag nanoparticle dispersion liquid)

One hundred liter (100 L) of Ag nanoparticle dispersion liquid (concentration of silver solid content : 0.02 wt%) was obtained with citric acid with reference to the method described in J. Phys. Chem., 1982, 86(17), pp3391-3395 (DOI:10.1021/j100214a025). Five liter (5 L) of 4mM TCAP aqueous solution was added thereto and it was well stirred. Then, by conducting centrifugal filter refinement, Ag nanoparticle dispersion liquid in which the Ag nanoparticles were protected by a small amount of aromatic compound (hereinafter referred to as Ag dispersion liquid) was obtained.

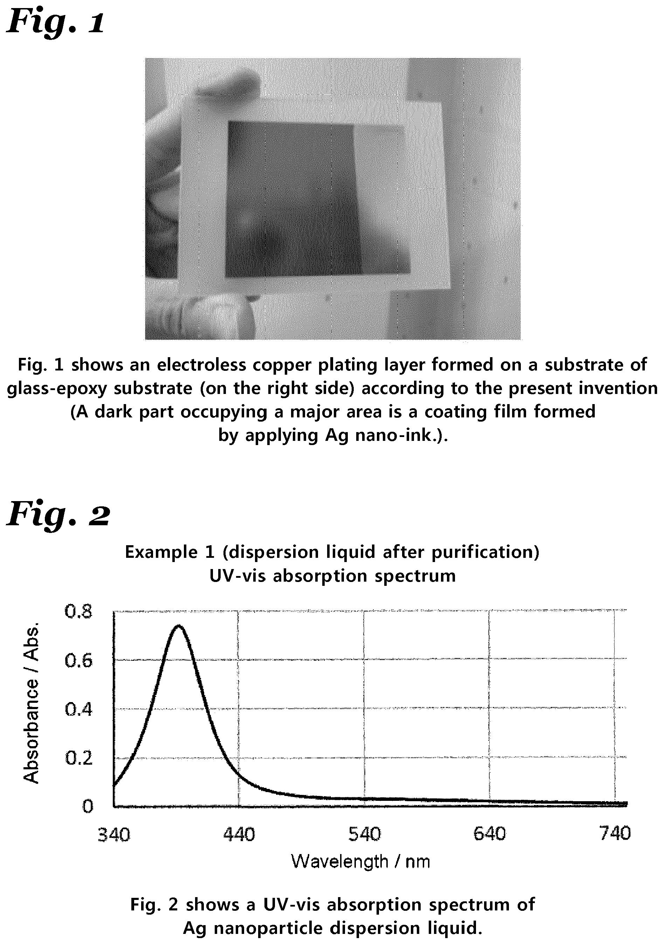

Here, deionized water was used for the refinement. The metal solid content weight of this Ag dispersion liquid was 52 wt%. A UV-Vis absorption spectrum of this Ag dispersion liquid was measured such that an obtained result is shown in Fig. 2. The particles were observed with a transmission electron microscope to find the average particle size was 20 nm. Here, the present dispersion liquid was stored in a refrigerator (5 °C) and it was confirmed that a stable dispersion state was maintained after one half-year by the visual test.

### Example 2

### (Preparation of Au nanoparticle dispersion liquid)

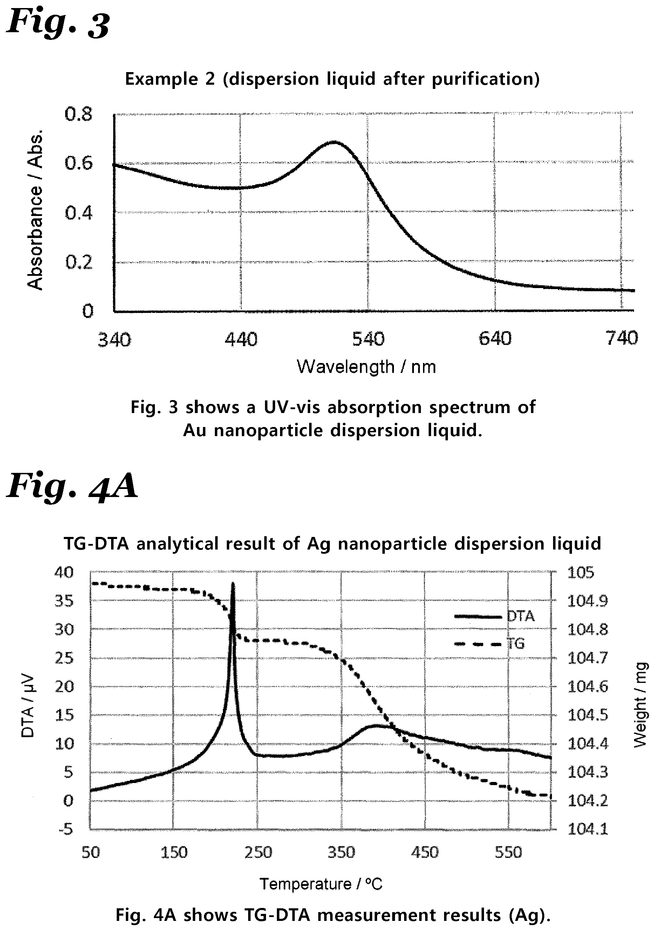

Au nanoparticle dispersion liquid (hereinafter referred to as Au dispersion liquid) was prepared with reference to the method described in Discuss. Faraday Soc., 1951, 11, 55-75 (DOI:10.1039/DF9511100055) and Example 1. The metal solid content weight of this Au dispersion liquid was 44 wt%. A UV-vis absorption spectrum of this Au dispersion liquid was measured such that an obtained result is shown in Fig. 3. The particles were observed with a transmission electron microscope to find the average particle size was 15 nm. Here, the present dispersion liquid was stored in a refrigerator (5 °C) and it was confirmed that a stable dispersion state was maintained after one half-year by the visual test.

### Example 3

### (Preparation of ink for ink-jet application)

Ink for ink-jet having a solid content weight of 10 wt%, a viscosity of 4 cps, and a surface tension of 29 mN (hereinafter referred to as Ag dispersion ink or Au dispersion ink) was obtained by adding ethylene glycol, hexanol, and PD002W to the metal nanoparticle dispersion liquid having been obtained for Examples 1 and 2.

### Example 4

### (Preparation of ink for ink-jet application with addition of binder resin)

With respect to the metal solid content weight, 5 wt% of binder resin was added to the metal nanoparticle dispersion liquid having been obtained for Examples 1 and 2. As the binder resin, AQ Nylon A-90 of water-soluble nylon (modified polyamide resin) manufactured by Toray Industries, Inc. was used as the binder resin. Then, ethylene glycol, hexanol, and PD002W were added such that an ink for ink-jet application having a solid content weight of 10 wt%, a viscosity of 4 cps, and a surface tension of 29 mN (hereinafter referred to as Ag dispersion ink with addition of binder resin or Au dispersion ink with addition of binder resin) was prepared.

### (Preparation of plating base)

A plating base was obtained by forming a coating film with an application method to described later and by heating and drying the coating film in the atmosphere at the temperature of 60 °C for 2-5 minutes.

### (Coating film forming method)

### (Spray application)

The metal dispersion liquid or metal dispersion ink having been obtained by the above-mentioned method was loaded in an airbrush (manufactured by Tamiya, Inc, product name; airbrush system No. 010 HG trigger-type airbrush) such that a coating film was formed by spraying the liquid or ink onto a substrate.

### (Blade coating)

The metal dispersion liquid or metal dispersion ink having been obtained by the above-mentioned methods was dripped on the substrate and a glass blade was used to spread the drop over the surface to form a coating film.

### (Ink-jet printing)

An ink-jet printer for black-and-white printing for a small office of PX-K100 (manufactured by SEIKO EPSON CORPORATION) was employed such that ink in an ink cartridge thereof was replaced with the metal dispersion ink for ink-jet application having been obtained for Examples 3 and 4. This printer was connected to a computer in which an ordinary computer software was used to operate the printer to form a coating film of the metal dispersion ink.

### (Metal content weight in coating film)

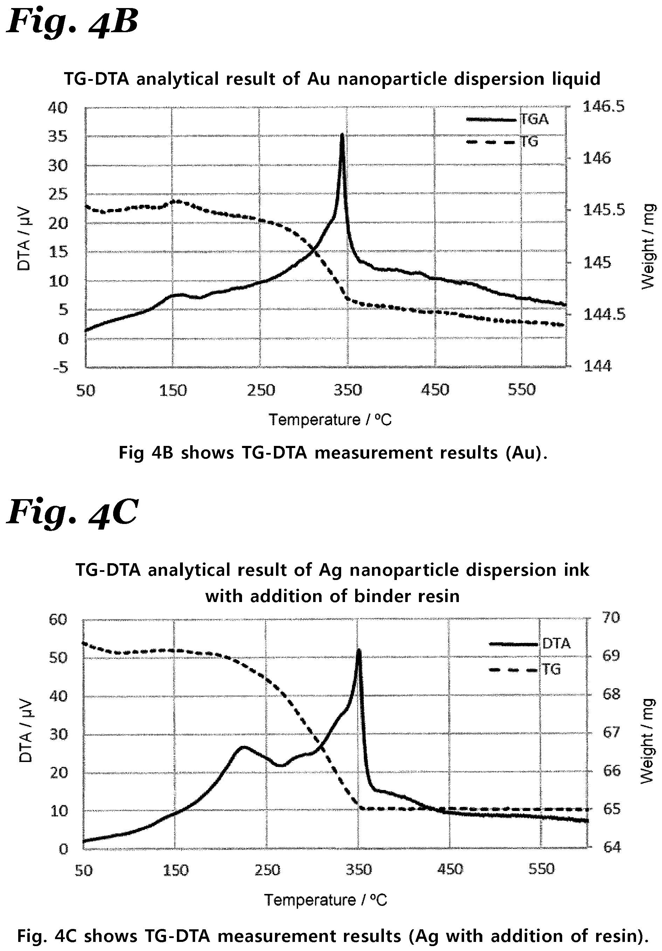

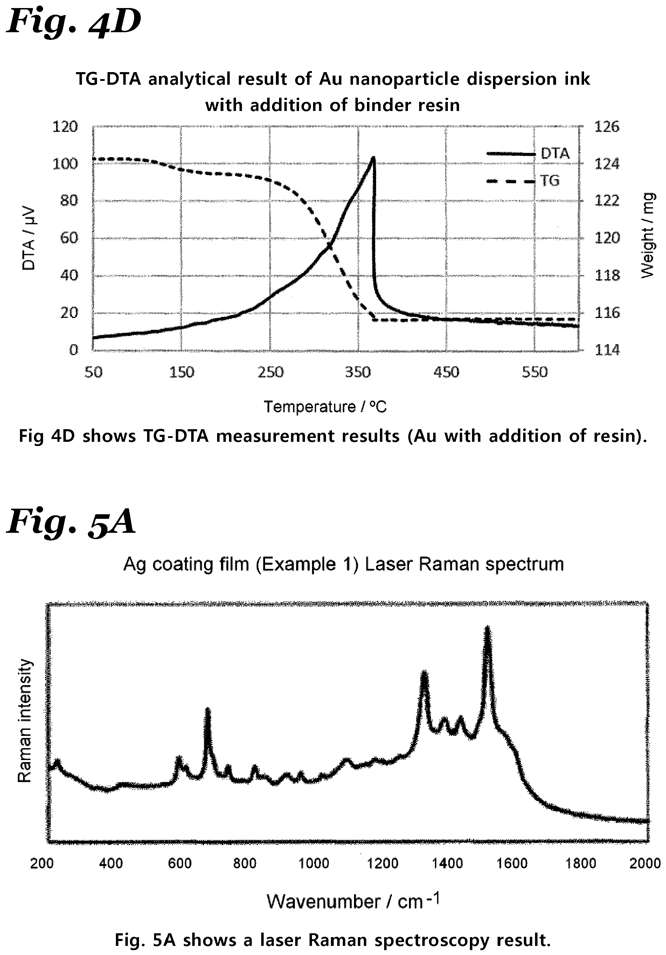

With respect to the coating films obtained by applying the metal nanoparticle dispersion liquid and the metal nanoparticle dispersion ink, which were obtained for Examples 1 to 4, the metal content amount in the coating film was measured by the TG-DTA analysis. The results are shown in Figs. 4A to 4D. The results are summarized in Table 1.

**[Table 1]**

| | Metal content |
|---|---|
| Example 1 | 99.7wt% |
| Example 2 | 99.2wt% |
| Example 3 | - (same as Examples 1 and 2) |
| Example 4 (Ag) | 93.9wt% |
| Example 4 (Au) | 93.5wt% |

### (Preparation of plating bath)

### (Preparation of electroless copper plating bath (1))

An electroless copper plating bath (1) was built with reference to the method described in the reference (Journal of the Surface Finishing Society of Japan, Vol.42, No.4, 1991, pp425-430). Thus, 674 mg of copper (II) sulfate pentahydrate, 1.58 g of ethylene diamine tetra acetic acid, tetra sodium salt tetra hydrate, and 2.5 mg of 2,2'-bipyridyl were dissolved in 90 ml of deionized water. After the pH value of this solution was adjusted to be 12.0 by using 25 wt% of sodium hydroxide solution, 565 µl of 37 wt% formaldehyde solution was added thereto and diluted in measuring cylinder to 100 ml total. Hereinafter this solution is referred to as Cu plating bath (1). This plating bath was used at the temperature of 70 °C.

### (Preparation of electroless copper plating bath (2))

An electroless copper plating liquid (ARG copper) manufactured by Okuno Chemical Industries Co., Ltd. was built with reference to the procedures and ratios described in the instruction manual. Thus, 3 ml of ARG copper (1) was diluted with 74 ml of deionized water and 20 ml of ARG copper (3) was added thereto and the mixture was stirred. Finally, 3 ml of ARG copper (2) was gradually added thereto and mixed them well. Hereinafter this solution is referred to as Cu plating bath (2). This plating bath was used at the temperature of 45 °C.

### (Preparation of electroless nickel-boron plating bath)

An electroless nickel-boron plating liquid (topchemialloy 66-LF) manufactured by Okuno Chemical Industries Co., Ltd. was built with reference to the procedures and ratios described in the instruction manual. Thus, 9 ml of topchemialloy 66-ML was diluted with 65 ml of deionized water and 3 ml of topchemialloy 66-1ML was added thereto and the mixture was stirred. Then, 6 ml of topchemialloy 66-2ML was gradually added thereto and finally the mixture was diluted in measuring cylinder to 100 ml total by adding deionized water. Hereinafter this solution is referred to as Ni plating bath. This plating bath was used at the temperature of 70 °C.

### (Embodiment 1)

### (Plating treatment to coating film of metal dispersion liquid-dispersion ink)

With respect to each dispersion liquid and dispersion ink as prepared by the above-mentioned methods, a coating film was formed on a glass substrate by the spray coating method and dried at the temperature of 60 °C for two minutes so as to make a plating base. An electroless plating treatment was carried out by immersing each plating base in each plating bath. The results are summarized in Table 2. From the results below, it should be understood that any of the dispersion liquid and dispersion ink can be utilized as the plating base only by applying and drying them.

### [Table 2]

**Table 2 Results of plating treatment onto plating base obtained by applying a composition on a glass substrate.**

| No. | Dispersion liquid-ink used for forming coating film | Used plating bath | Evaluation of plating* |
|---|---|---|---|
| Manufactured example 1 | Ag dispersion liquid | Cu plating bath 1 | ○ |
| Manufactured example 2 | Ag dispersion liquid | Cu plating bath 2 | ○ |
| Manufactured example 3 | Ag dispersion liquid | Ni plating bath | ○ |
| Manufactured example 4 | Ag dispersion ink | Cu plating bath 2 | ○ |
| Manufactured example 5 | Ag dispersion ink | Ni plating bath | ○ |
| Manufactured example 6 | Ag dispersion ink with addition of binder resin | Cu plating bath 2 | ○ |
| Manufactured example 7 | Ag dispersion ink with addition of binder resin | Ni plating bath | ○ |
| Manufactured example 8 | Au dispersion liquid | Cu plating bath 2 | ○ |
| Manufactured example 9 | Au dispersion ink | Cu plating bath 2 | ○ |
| Manufactured example 10 | Au dispersion ink with addition of binder resin | Cu plating bath 2 | ○ |

| | | | |
|---|---|---|---|
| * ○: Reduction reaction occurred on metal coating film and metal plating precipitation was confirmed by visual inspection. * ×: Metal plating precipitation was not confirmed by visual inspection. | | | |

### (Embodiment 2)

### (Selection of substrate)

The Ag dispersion liquid of Example 1 and the Ag dispersion ink (with addition of binder resin) of Example 4 were sprayed and coated onto the substrates as shown in the following Table 3. From Tables 2 and 3, it should be understood that the present coating film formed on any of an inorganic substrate, an organic substrate, or a composite substrate should serve well as the plating base.

### [Table 3]

**Table 3 Results of plating treatment onto plating base formed on various kinds of substrates.**

| No. | Dispersion liquid-ink used for forming coating film | Use substrate | Used plating bath | Evaluation of plating* |
|---|---|---|---|---|
| Manufactured example 11 | Ag dispersion liquid | Glass-epoxy | Cu plating bath 2 | ○ |
| Manufactured example 12 | Ag dispersion liquid | Glass-epoxy | Ni plating bath | ○ |
| Manufactured example 13 | Ag dispersion liquid | PET film 1 | Cu plating bath 2 | ○ |
| Manufactured example 14 | Ag dispersion liquid | PET film 1 | Ni plating bath | ○ |
| Manufactured example 15 | Ag dispersion liquid | PET film 2 | Cu plating bath 2 | ○ |
| Manufactured example 16 | Ag dispersion liquid | PET film 2 | Ni plating bath | ○ |
| Manufactured example 17 | Ag dispersion ink with addition of binder resin | Glass-epoxy | Cu plating bath 2 | ○ |
| Manufactured example 18 | Ag dispersion ink with addition of binder resin | Glass-epoxy | Ni plating bath | ○ |
| Manufactured example 19 | Ag dispersion ink with addition of binder resin | PET film 1 | Cu plating bath 2 | ○ |
| Manufactured example 20 | Ag dispersion ink with addition of binder resin | PET film 1 | Ni plating bath | ○ |
| Manufactured example 21 | Ag dispersion ink with addition of binder resin | PET film 2 | Cu plating bath 2 | ○ |
| Manufactured example 22 | Ag dispersion ink with addition of binder resin | PET film 2 | Ni plating bath | ○ |

| | | | | |
|---|---|---|---|---|
| * ○: Reduction reaction occurred on metal coating film and metal plating precipitation was confirmed by visual inspection. * ×: Metal plating precipitation was not confirmed by visual inspection. | | | | |

### (Embodiment 3)

### (Selection of coating method)

The Ag dispersion ink with addition of binder resin of Example 4 was applied to a PET film (1) by the blade coationg or the inkjet printing and heated and dried at the temperature of 60 °C for 5 minutes so as to form a plating base, and then, the plating treatment was carried out thereon. The results are shown in Table 4. From the results below, it should be understood that the present coating film serves effectively as the plating base notwithstanding the applying methods.

**[Table 4]**

| | Coating film formation method | Used plating bath | Evaluation of plating * |
|---|---|---|---|
| Manufactured example 23 | Doctor blade method | Cu plating bath 2 | ○ |
| Manufactured example 24 | Doctor blade method | Ni plating bath | ○ |
| Manufactured example 25 | Ink-jet method | Cu plating bath 2 | ○ |
| Manufactured example 26 | Ink-jet method | Ni plating bath | ○ |

| | | | |
|---|---|---|---|
| * ○: Reduction reaction occurred on metal coating film and metal plating precipitation was confirmed by visual inspection. * ×: Metal plating precipitation was not confirmed by visual inspection. | | | |

### (Supplemental 1)

### (Strong heat treatment)

The coating film of the Ag dispersion ink with addition of binder of Example 4 was heated in the atmosphere at the temperature of 150 °C for 10 minutes so as to form a coating film, on which a plating treatment was conducted. The results are summarized in Table 5 below. From the results, it should be understood that the coating film according to the present invention, even when a high temperature treatment of 150 °C was conducted, it should be understood that it did not lose the forming ability of plating.

### [Table 5]

**Table 5 Results of plating treatment onto 150 °C-heat-treated coating film with Ag dispersion ink with addition of binder resin.**

| No. | Used plating bath | Evaluation of plating* |
|---|---|---|
| Manufactured example 27 | Cu plating bath 2 | ○ |
| Manufactured example 28 | Ni plating bath | ○ |

| | | |
|---|---|---|
| * ○: Reduction reaction occurred on metal coating film and metal plating precipitation was confirmed by visual inspection. * ×: Metal plating precipitation was not confirmed by visual inspection. | | |

### (Supplemental 2)

### (Laser Raman spectroscopy measurement)

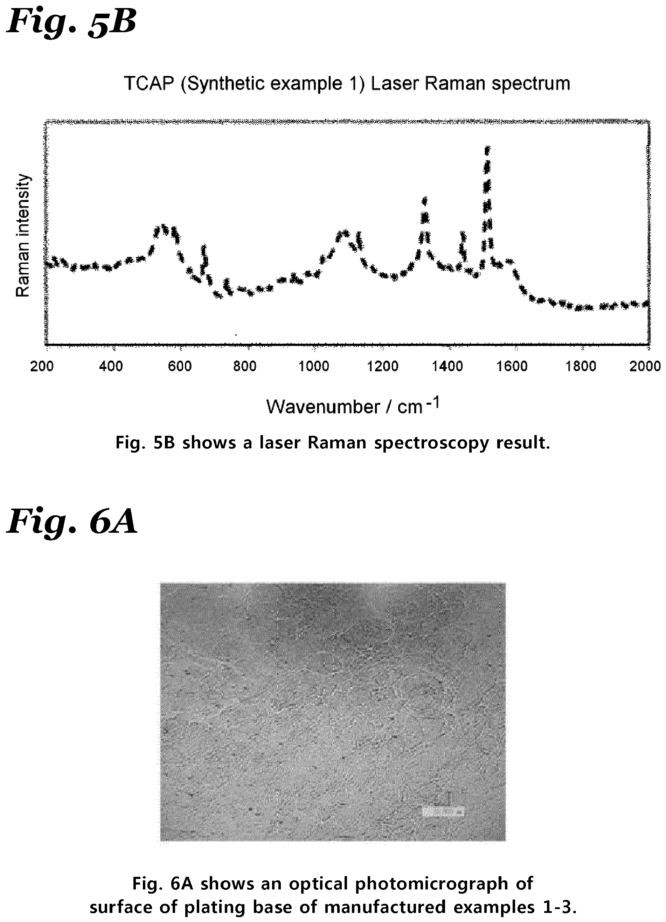

Laser Raman spectra of the dried Ag coating film (before plating treatment) having been used for Example 1 and TCAP as the dispersing agent were measured and the spectra as shown in Figs 5A and 5B were obtained. From the present results, it can be confirmed that TCAP still existed in the dried Ag coating film, and thus, on surfaces of Ag nanoparticles. Here, the wavelength of laser light used for the measurement was 532 nm. And a measurement sample of TCAP was obtained by spraying and drying TCAP saturated solution onto a glass plate.

### (Supplemental 3)

### (Number of holes per 1 cm²)

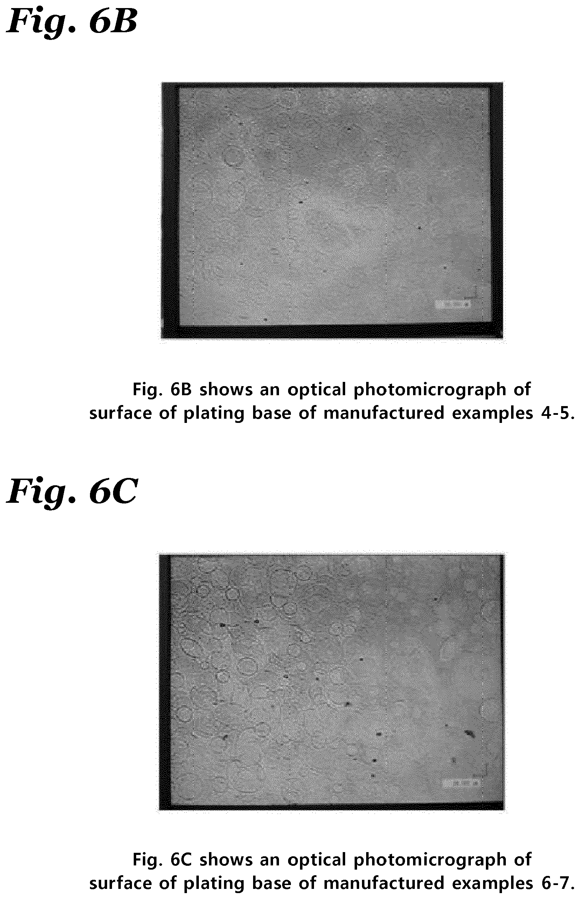

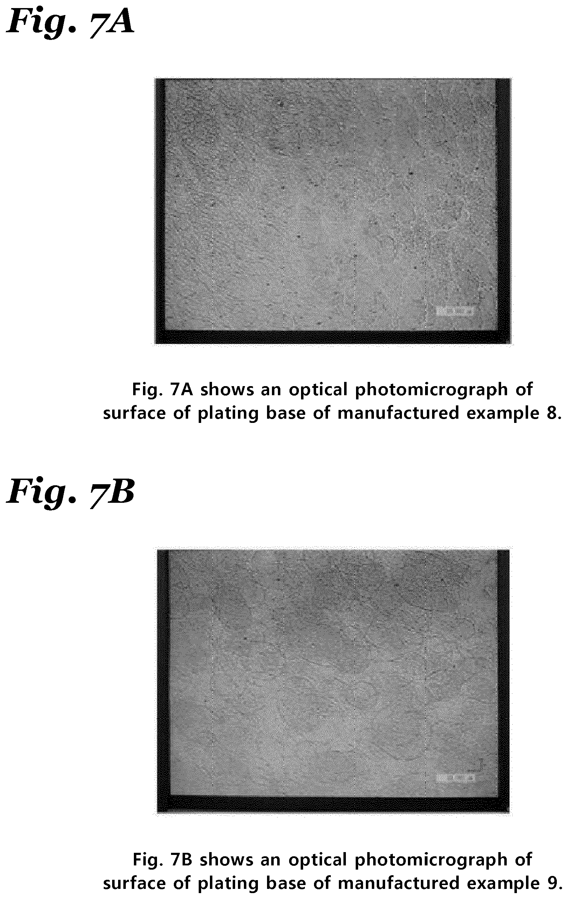

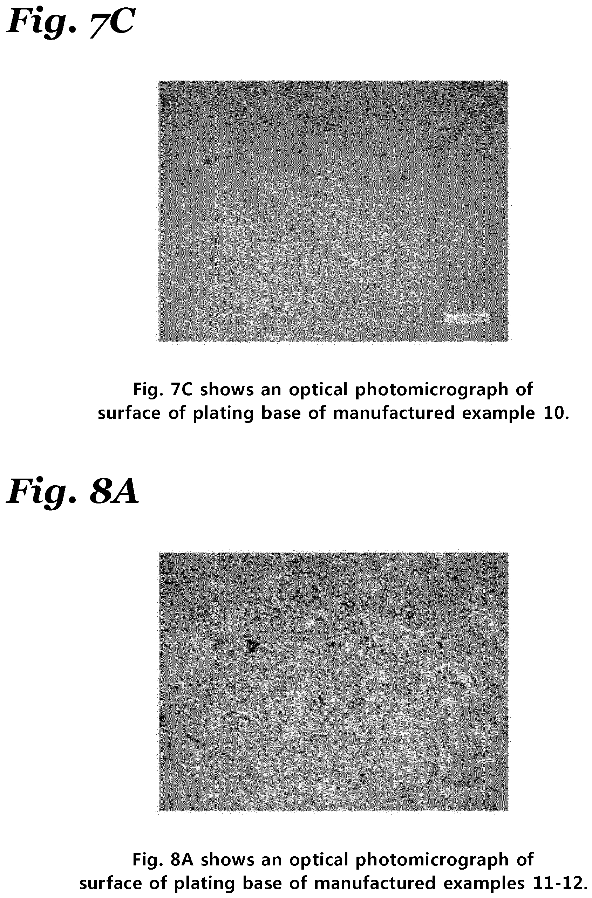

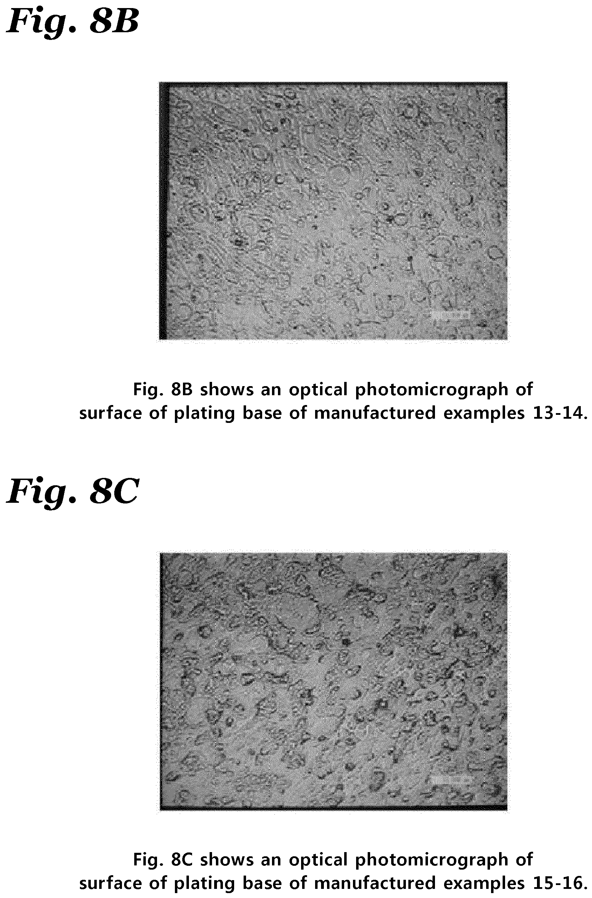

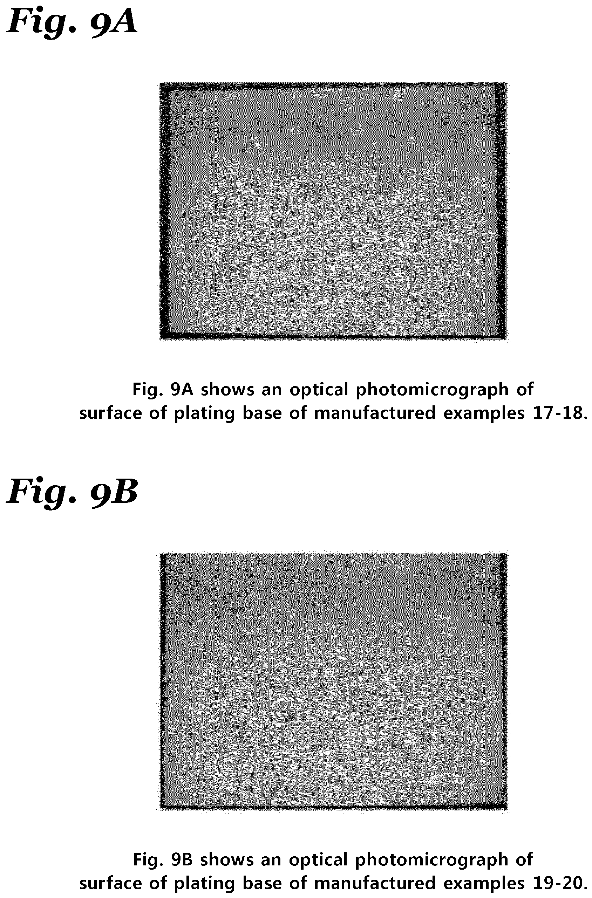

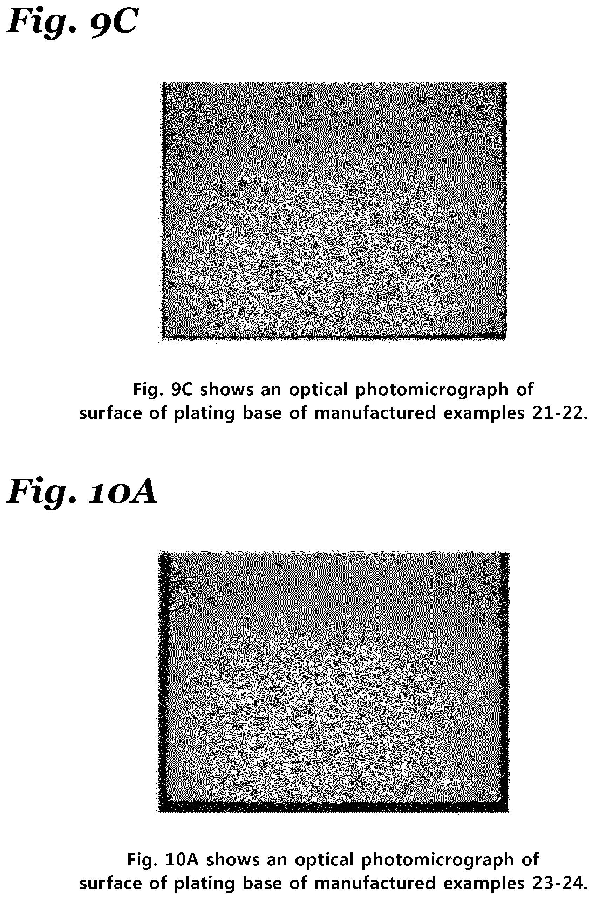

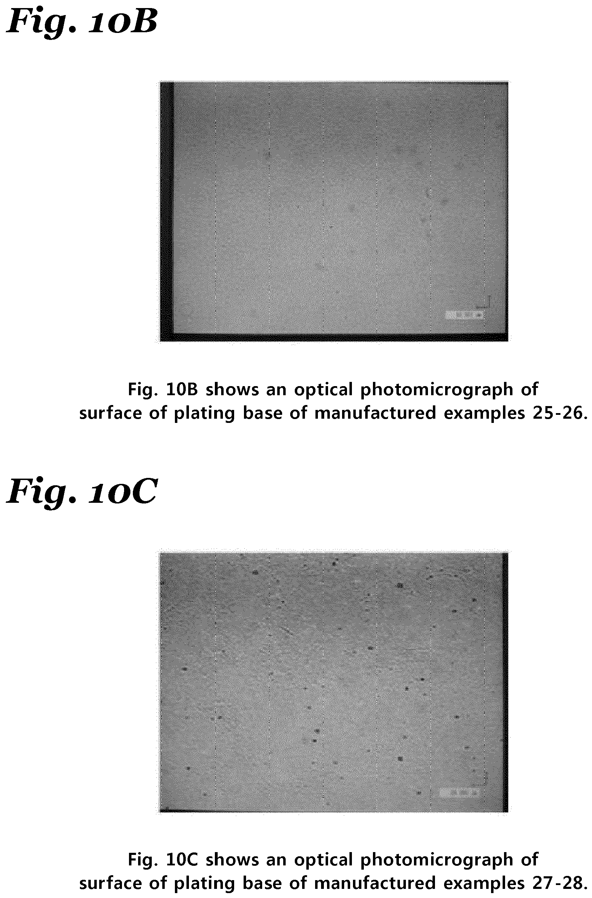

Photomicrographs of surfaces of plating base of the above-mentioned manufactured examples 1 to 30 are shown in Figs. 6A to 10C. The measurement results of numbers and sizes of holes from these pictures are summarized in Table 6 below.

### [Table 6]

**Table 6 Number of holes per 1cm² and size of holes ***

| | Number of holes per 1 cm² | Size of holes |
|---|---|---|
| Manufactured examples 1-3 | 3.5×10³ | 0.5 - 2 µm |
| Manufactured examples 4-5 | 1.9×10³ | 0.5 - 3 µm |
| Manufactured examples 6-7 | 1.6×10³ | 0.5 - 3 µm |
| Manufactured example 8 | 1.9×10³ | 0.5 - 2 µm |
| Manufactured example 9 | 3.3×10³ | 0.5 - 2 µm |
| Manufactured example 10 | 1.7×10³ | 1 - 3 µm |
| Manufactured examples 11-12 | 1.2×10³ | 1 - 5 µm |
| Manufactured examples 13-14 | 1.5×10³ | 0.5 - 4 µm |
| Manufactured examples 15-16 | 1.0×10³ | 0.5 - 0.6 µm |
| Manufactured examples 17-18 | 1.2×10³ | 0.5 - 3 µm |
| Manufactured examples 19-20 | 3.1×10³ | 0.5 - 4 µm |
| Manufactured examples 21-22 | 1.0×10³ | 3 - 5 µm |
| Manufactured examples 23-24 | 4.0×10³ | 0.3 - 3 µm |
| Manufactured examples 25-26 | 3.5×10² | 0.3 - 0.6 µm |
| Manufactured examples 27-28 | 2.9×10³ | 0.5 - 3 µm |

| | | |
|---|---|---|
| * : Measured by observing surface of plating base with microscope. | | |

As mentioned above, it is preferable that the thin film serving as the plating base has high adhesiveness with the substrate. In general, it is possible to try to enhance the adhesiveness by adding the binder resin. On the other hand, it is preferable that the nanoparticles in the thin film are held strongly inside the film. For example, at least part of the surface of the inorganic nanoparticle is strongly covered with the organic pi (n) conjugated ligand via pi (n) junction caused by the organic pi (n) conjugated ligand. The pi (n) junction may be strong mutual interaction between the organic pi (n) orbital and the inorganic nanoparticle orbital, which may be caused by bringing the organic pi (n) orbital close to the surface of the inorganic nanoparticle. Such effect is expected in the case where, for example, porphyrin, phthalocyanine, naphthalocyanine, and the like are used as the organic pi (n) conjugated ligand. The strength of the pi (n) junction can be quantitatively evaluated by the ultraviolet-visible light spectral measurement. Porphyrin and phthalocyanine have characteristic absorbance as referred to as soret band or Q band in the visible light range. When the strong pi (n) junction is expressed, the organic pi (n) orbital is metalized by the strong mutual interaction between the organic and the inorganic such that the above characteristic absorbance becomes significantly broadened. Therefore, in porphyrin, phthalocyanine, and naphthalocyanine protecting metal nanoparticles, Q bands around 650 nm and around 700 nm observed in respective ligands by themselves substantially disappear. This indicates existence of a strong pi junction. In fact, when UV-vis spectral measurement of OTAP protecting pi (n) junction palladium-core-gold-shell nanoparticles (OTAP is a phthalocyanine compound) was conducted, the soret band around 420 nm was broadened and so much broadening was recognized such that the Q band from 500 to 700 nm could not be observed (WO2011/114713), thereby expecting there was a strong pi junction.

Here, that a metal nanoparticle solution is stably dispersed may mean that, in one atmosphere of air at 25 °C, (1) after the composition in a test tube is sufficiently stirred, the test tube stands still for 60 minutes and substantially no precipitation is recognized in the test tube, or (2) even if precipitation is recognized in the test tube after still standing for 120 minutes or longer from when the composition in the test tube is stirred sufficiently, substantially no precipitation is recognized after still standing for 10 minutes from when the composition is stirred again. And a coating film having electric conductivity can correspond to a case where a thin film of 1 µm thickness has a resistance value of 1.0 x 10³ Ω or less between two points apart by distance of 1 cm wherein the thin film is formed by applying the composition onto a glass substrate and letting the applied composition dry such that the dispersing medium or solvent is substantially lost from a surface thereof such that the thin film is in a solid state or a solid body. Here, the applying and drying can be conducted at the so-called room temperature (for example, at around 25 °C and at one atmosphere of air, printing or the like as application is made and the applied composition is left for at least 5 minutes (or until it is recognized that no dispersing medium or solvent is observed in a visual test)). It is not necessary to press the applied film with a press or the like or apply a pressure thereon and it is not necessary to heat it. It may be held at the temperature of 100 °C or less. Judgement whether precipitation exists or not can be sufficiently made by a visual test. An accelerated test, for example, by centrifugal separation may be utilized. As the observation is continuously made and recorded as a series of results until precipitation is clearly recognized while conditions are changed to enhance more precipitation effect, a standard for judgment of existence or nonexistence of precipitation can be determined.

Therefore, the composition to form a plating base according to the present invention comprises (A) at least one or two or more kinds of inorganic nanoparticles selected from a group consisting of metal, semiconductor substance, and metal oxide wherein the inorganic nanoparticles have an average particle diameter of 1 nm to 500 nm as measured according to a method of JIS H7804:2005 or JIS Z 8827-1:2008; (B) an organic pi conjugated ligand including at least one selected from a group consisting of 2,11,20,29-tetrakis (carboxy) phthalocyanine (TCAP), 2,11,20,29-tetrakis (carboxy) naphthalocyanine(TCAN), and 2,3,11,12,20,21,29,30-Octakis (carboxy) phthalocyanine (OCAP); and (C) a water-soluble solvent and/or dispersing medium. Further, the composition may have dispersing ability such that precipitation cannot be recognized after still standing for 60 minutes from when the composition is made in a homogeneous dispersion state. Further, the composition may have dispersing ability to maintain a dispersion state for at least 10 minutes from when the composition is stirred so as to be in a redispersed state even if it is the case where precipitation is recognized after still standing for 120 minutes from when the composition is initially made in a homogeneous dispersed state. And since the water-soluble solvent and/or dispersing medium is substantially lost from the composition, the composition may have an aggregating property to exhibit electric conductivity when the rest of the composition becomes in a solid state or a solid body.

Here, as mentioned above, although the peak (around 750 nm) derived from the Q band substantially disappeared due to the broadening in the UV-vis measurement, it is possible to confirm that phthalocyanine existed on the inorganic nanoparticles because the peak derived from phthalocyanine existed in the laser Raman spectroscopy measurement in Figs. 5A and 5B.

Here, to exhibit electric conductivity may mean that the electric resistance is lowered. For example, the volume resistivity may be 1.0 x 10⁻³ Ω/cm or less. And the electric conductivity of the composition may be evaluated by measuring an electric resistance between two points 1 cm apart from each other on an applied and dried composition at an ambient temperature which is formed on a non-electric conductive substrate. For example, in the case where the thickness of this coating film is 1 µm, it can be said that it has electric conductivity if the value of resistance is 1.0×10³ Ω or less. And the electrical conductivity of this thin film was evaluated by the four-terminal method (IEC60093, JISK6911). For example, if it is 1.0×10³ S/cm, it can be said that it has electric conductivity.

When a UV-vis spectrum measurement is conducted with respect to porphyrin, phthalocyanine, naphthalocyanine, and the like, the soret band around 420 nm and the Q band from 500 to 800 nm are observed as characteristic absorbance. In the case where the pi junction does not exist, only when the solvent or the like is removed by evaporation and the like, this soret band and the Q band can be observed such that existence of porphyrin, phthalocyanine, naphthalocyanine, and the like can be detected in a non-destructive way. On the other hand, in the case where this strong pi junction exists, this soret band and the Q band are significantly broadened. However, in the case where an excess amount thereof is added, it may be OK that the soret band and the Q band are observed and the quantification of the spectra may enable quantitative measurement of the excess amount of porphyrin, phthalocyanine, naphthalocyanine, and the like. Or it is considered that the characteristic absorbance of such soret band and Q band would be reduced if the excess amount of porphyrin, phthalocyanine, naphthalocyanine, and the like are extracted from the coating film including them. Thus, it is possible to detect the existence of porphyrin, phthalocyanine, naphthalocyanine, and the like and the existence of strong pi junction. On the other hand, even if the Q band substantially disappears in the UV-vis measurement, it is possible to confirm whether porphyrin, phthalocyanine, naphthalocyanine, and the like exist or not by utilizing another measurement of a laser Raman spectroscopy and the like. Thus, existence of the strong pi junction can be detected by employing a plurality of measurement methods.

In Fig. 5A, a laser Raman spectroscopic measurement result of the coating film used for Embodiment 1 is shown. Since a characteristic Raman spectrum for phthalocyanine can be confirmed, it can be confirmed whether phthalocyanine exists on the surface of this coating film, thus, surface of the metal nanoparticles dispersed therein. On the other hand, the thin film formed as the plating base may have electric conductivity. That is, it is considered that this is because there are contacts between the electric conductive inorganic nanoparticles in a direct manner such that such contacts spread at least portion of the thin film. For example, in the case where a general polymer dispersing agent is used, it is difficult to cause the electric conductive inorganic nanoparticles to contact with each other in a direct manner and, even if such contacts are achieved partially, it would be difficult to make such contacts spread in a macroscopic part of the thin film. To the contrary, in the present invention, with respect to the coating film formed from the composition and the thin film for the plating base, contacts between the electric conductive inorganic nanoparticles in a direct manner are easily spread as the network spreads such that the coating film is constituted of them in a skeleton manner. Also, in order to form such a structure, it is preferable to make the content amount of the electric conductive nanoparticles in the coating film at least 70 wt/wt% or more. And it is also preferable to make the amount 80 wt/wt% or more. Further, it is also preferable to make the amount 90 wt/wt% or more. Since another constituent other than the nanoparticles is included in the coating film, the content amount of the nanoparticles is less than 100%. As long as the composition to form the coating film can be maintained in a dissolved or dispersed state, the content amount could be extremely close to 100% and, if it would be technically OK, as close to 100% as possible.

On the other hand, the electric conductivity could be detected optically. For example, if the coating film formed from the composition according to the present invention is viewed, transmitted light through the film appears to be seen through a transparent film in the case that the film does not have electric conductivity. However, once the electric conductivity may be imparted partially on the film, the transmitted light would be colored in brown and then further would become colored in black. In the case where the electric conductivity is significantly high, the coating film might show metal luster. If the transmitted light would appear substantially black, it can be said that the film has electric conductivity. Such optical standard may be measured by utilizing an instrument that is commercially available in accordance with the method described in, for example, JIS8741 (specular gloss-measuring method) and JIS8722 (measuring method of color - reflectance and reflected and transmitted body colors).

### Industrial Applicability

With respect to a substrate (and a part thereof) having more complicated shape or a substrate comprising a kind of material being difficult for plating by the conventional plating method, a plating film could be obtained by a simpler method if the present invention is utilized. It would be expected to perform an excellent effect in the art where, more specifically, wiring and electrode formation on the electronic substrate, RFID antenna, electromagnetic shield, decorative application, and the like are concerned.

## Claims

1. A composition for forming a plating base, comprising:
(A) inorganic nanoparticles that are made of at least one or two or more kinds of substances selected from a group consisting of metal, semiconductor substance, and metal oxide wherein the inorganic nanoparticles have an average particle diameter of 1 nm to 500 nm as measured according to a method of JIS H7804:2005 or JIS Z 8827-1:2008 ;
(B) at least one or two or more kinds of organic pi conjugated ligands which include at least one selected from a group consisting of 2,11,20,29-tetrakis (carboxy) phthalocyanine (TCAP), 2,11,20,29- tetrakis (carboxy) naphthalocyanine (TCAN), and 2,3,11,12,20,21,29,30-Octakis (carboxy) phthalocyanine (OCAP); and
(C) an aqueous or water-soluble solvent and/or dispersing medium wherein a residue of the composition exhibits electronic conductivity due to substantial loss of the aqueous or water-soluble solvent and/or dispersing medium from the composition.

2. The composition for forming the plating base according to claim 1 further comprising: (D) a binder resin.

3. The composition for forming the plating base according to claims 1 or 2 wherein the inorganic nanoparticles comprise at least one kind of element or metal alloy or a compound formed of at least one kind of element and/or metal alloy selected from a group consisting of Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po, and At.

4. The composition for forming the plating base according to any one of claims 1 to 3 wherein the aqueous or water-soluble solvent and/or dispersing medium comprises at least one selected from a group consisting of water, and an organic solvent that is miscible in water.

5. The composition for forming the plating base according to claim 2 wherein the binder resin comprises at least one or two or more kinds selected from a group consisting of acrylic resin, polyester, polyurethane polyethylene resin, polypropylene, polystyrene, polyvinylpyrrolidone, polyethylene glycol, polyamide, polyepoxy, polyvinyl alcohol, polysaccharides, and protein.

6. A thin film for a plating base which is attached to a predetermined substrate wherein the film comprises
(A) inorganic nanoparticles that are made of at least one or two or more kinds of substances selected from a group consisting of metal, semiconductor substance, and metal oxide wherein the inorganic nanoparticles have an average particle diameter of 1 nm to 500 nm as measured according to a method of JIS H7804:2005 or JIS Z 8827-1:2008; and
(B) at least one or two or more kinds of organic pi conjugated ligands which include at least one selected from a group consisting of 2,11,20,29-tetrakis (carboxy) phthalocyanine (TCAP), 2,11,20,29- tetrakis (carboxy) naphthalocyanine (TCAN), and 2,3,11,12,20,21,29,30-Octakis (carboxy) phthalocyanine (OCAP), and
wherein the inorganic nanoparticles and the organic pi conjugated ligands are substantially in a homogeneously mixed state in the film.

7. The thin film for the plating base according to claim 6 further comprising:
(C) an aqueous or water-soluble solvent and/or dispersing medium at most to an extent such that the thin film is recognized as a solid body and exhibits electric conductivity.

8. The thin film for the plating base according to claim 6 or 7 further comprising:
(D) a binder resin.

9. The thin film for the plating base according to any one of claims 6 to 8 wherein the inorganic nanoparticles comprises at least one kind of element or a metal alloy or a compound formed of at least one kind of element and/or metal alloy selected from a group consisting of Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po, and At.

10. The thin film for the plating base according to any one of claims 7 to 9 wherein the aqueous or water-soluble solvent and/or dispersing medium comprises at least one selected from a group consisting of water, and an organic solvent that is miscible in water,

11. The thin film for the plating base according to claim 8 wherein the binder resin may include at least one or two or more kinds selected from a group consisting of acrylic resin, polyester, polyurethane polyethylene resin, polypropylene, polystyrene, polyvinylpyrrolidone, polyethylene glycol, polyamide, polyepoxy, polyvinyl alcohol, polysaccharides, and protein.

12. The thin film for the plating base according to any one of claims 6 to **11** wherein surfaces of the inorganic nanoparticles are at least partially exposed from the outermost surface of the thin film.

13. A method of forming a metal coating film over the thin film recited in any one of claims 6 to 12 comprising the step of:
applying electrolytic plating or electroless plating onto the thin film wherein the above-mentioned metal coating film may include at least one or two or more kinds of elements or a metal alloy and/or a compound including at least one or two or more kinds of elements, which are selected from a group consisting of copper, nickel, tin, chrome, zinc, gold, silver, platinum, rhodium, and palladium.

## Patentansprüche

1. Zusammensetzung zur Bildung einer Plattierungsbasis, umfassend:
(A) anorganische Nanopartikel, die aus wenigstens einer oder zwei oder mehr Arten von Substanzen bestehen, die aus der Gruppe ausgewählt sind, die aus Metall, Halbleitersubstanz und Metalloxid besteht, wobei die anorganischen Nanopartikel einen nach einer Methode gemäß JIS H7804:2005 oder JIS Z 8827-1:2008 gemessenen mittleren Teilchendurchmesser von 1 nm bis 500 nm aufweisen;
(B) wenigstens eine oder zwei oder mehr Arten von organischen pi-konjugierten Liganden, die wenigstens einen umfassen, der aus der Gruppe ausgewählt ist, die aus 2,11,20,29-Tetrakis(carboxy)phthalocyanin (TCAP), 2,11,20,29-Tetrakis(carboxy)naphthalocyanin (TCAN) und 2,3,11,12,20,21,29,30-Octakis(carboxy)phthalocyanin (OCAP) besteht; und
(C) ein wässriges oder wasserlösliches Lösungsmittel und/oder Dispersionsmedium, wobei ein Rückstand der Zusammensetzung aufgrund des wesentlichen Verlusts des wässrigen oder wasserlöslichen Lösungsmittels und/oder Dispersionsmediums aus der Zusammensetzung elektronische Leitfähigkeit aufweist.

2. Zusammensetzung zur Bildung der Plattierungsbasis gemäß Anspruch 1, weiterhin umfassend: (D) ein Bindeharz.

3. Zusammensetzung zur Bildung der Plattierungsbasis gemäß Anspruch 1 oder 2, wobei die anorganischen Nanopartikel wenigstens eine Art von Element oder Metalllegierung oder eine Verbindung, die aus wenigstens einer Art von Element und/oder Metalllegierung gebildet ist, die aus der Gruppe ausgewählt ist, die aus Li, Be, B, Na, Mg, AI, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po und At besteht, umfassen.

4. Zusammensetzung zur Bildung der Plattierungsbasis gemäß einem der Ansprüche 1 bis 3, wobei das wässrige oder wasserlösliche Lösungsmittel und/oder Dispersionsmedium wenigstens eines umfasst, das aus der Gruppe ausgewählt ist, die aus Wasser und einem organischen Lösungsmittel, das mit Wasser mischbar ist, besteht.

5. Zusammensetzung zur Bildung der Plattierungsbasis gemäß Anspruch 2, wobei das Bindeharz wenigstens eine oder zwei oder mehr Arten umfasst, die aus der Gruppe ausgewählt sind, die aus Acrylharz, Polyester, Polyurethan-Polyethylen-Harz, Polypropylen, Polystyrol, Polyvinylpyrrolidon, Polyethylenglycol, Polyamid, Polyepoxid, Polyvinylalkohol, Polysacchariden und Protein besteht.

6. Dünnschicht für eine Plattierungsbasis, die an einem vorbestimmten Substrat befestigt ist, wobei die Schicht umfasst:
(A) anorganische Nanopartikel, die aus wenigstens einer oder zwei oder mehr Arten von Substanzen bestehen, die aus der Gruppe ausgewählt sind, die aus Metall, Halbleitersubstanz und Metalloxid besteht, wobei die anorganischen Nanopartikel einen nach einer Methode gemäß JIS H7804:2005 oder JIS Z 8827-1:2008 gemessenen mittleren Teilchendurchmesser von 1 nm bis 500 nm aufweisen; und
(B) wenigstens eine oder zwei oder mehr Arten von organischen pi-konjugierten Liganden, die wenigstens einen umfassen, der aus der Gruppe ausgewählt ist, die aus 2,11,20,29-Tetrakis(carboxy)phthalocyanin (TCAP), 2,11,20,29-Tetrakis(carboxy)naphthalocyanin (TCAN) und 2,3,11,12,20, 21,29,30-Octakis(carboxy)phthalocyanin (OCAP) besteht;
wobei sich die anorganischen Nanopartikel und die organischen pi-konjugierten Liganden in dem Film in einem im Wesentlichen homogen gemischten Zustand befinden.

7. Dünnschicht für die Plattierungsbasis gemäß Anspruch 6, weiterhin umfassend:
(C) ein wässriges oder wasserlösliches Lösungsmittel und/oder Dispersionsmedium höchstens in einem solchen Anteil, dass die Dünnschicht als fester Körper anerkannt wird und elektrische Leitfähigkeit aufweist.

8. Dünnschicht für die Plattierungsbasis gemäß Anspruch 6 oder 7, weiterhin umfassend:
(D) ein Bindeharz.

9. Dünnschicht für die Plattierungsbasis gemäß einem der Ansprüche 6 bis 8, wobei die anorganischen Nanopartikel wenigstens eine Art von Element oder Metalllegierung oder eine Verbindung, die aus wenigstens einer Art von Element und/oder Metalllegierung gebildet ist, die aus der Gruppe ausgewählt ist, die aus Li, Be, B, Na, Mg, AI, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po und At besteht, umfassen.

10. Dünnschicht für die Plattierungsbasis gemäß einem der Ansprüche 7 bis 9, wobei das wässrige oder wasserlösliche Lösungsmittel und/oder Dispersionsmedium wenigstens eines umfasst, das aus der Gruppe ausgewählt ist, die aus Wasser und einem organischen Lösungsmittel, das mit Wasser mischbar ist, besteht.

11. Dünnschicht für die Plattierungsbasis gemäß Anspruch 8, wobei das Bindeharz wenigstens eine oder zwei oder mehr Arten umfasst, die aus der Gruppe ausgewählt sind, die aus Acrylharz, Polyester, Polyurethan-Polyethylen-Harz, Polypropylen, Polystyrol, Polyvinylpyrrolidon, Polyethylenglycol, Polyamid, Polyepoxid, Polyvinylalkohol, Polysacchariden und Protein besteht.

12. Dünnschicht für die Plattierungsbasis gemäß einem der Ansprüche 6 bis 11, wobei Oberflächen der anorganischen Nanoteilchen aus der äußersten Oberfläche der Dünnschicht heraus wenigstens teilweise exponiert sind.

13. Verfahren zur Bildung einer Metallbeschichtung über der Dünnschicht gemäß einem der Ansprüche 6 bis 12, umfassend den Schritt:
Auftragen einer elektrolytischen Plattierung oder stromlosen Plattierung auf die Dünnschicht, wobei die oben genannte Metallbeschichtung wenigstens eine oder zwei oder mehr Arten von Elementen oder eine Metalllegierung und/oder eine Verbindung, die wenigstens eine oder zwei oder mehr Arten von Elementen umfasst, die aus der Gruppe ausgewählt sind, die aus Kupfer, Nickel, Zinn, Chrom, Zink, Gold, Silber, Platin, Rhodium und Palladium besteht, umfassen kann.

## Revendications

1. Composition pour former une base de placage, comprenant :
(A) des nanoparticules inorganiques étant en au moins une ou deux ou plusieurs espèces de substances choisies dans un groupe consistant en métal, substance semi-conductrice, et oxyde métallique, dans laquelle des nanoparticules inorganiques présentent un diamètre moyen de particules de 1 nm à 500 nm tel que mesuré selon la méthode de JIS H7804:2005 ou JIS Z 8827-1:2008,
(B) au moins une ou deux ou plusieurs espèces de ligands pi-conjugués organiques comprenant au moins l'un choisi dans un groupe consistant en 2,11,20,29-tétrakis(carboxy)phtalocyanine (TCAP), 2,11,20,29-tétrakis-(carboxy)naphtalocyanine (TCAN) et 2,3,11,12,20,21,29,30-octakis(carboxy)phtalocyanine (OCAP), et
(C) un solvant et/ou agent dispersant aqueux ou soluble dans l'eau, dans laquelle un résidu de la composition présente une conductivité électronique à cause d'une perte substantielle dans la composition dudit solvant et/ou agent dispersant aqueux ou soluble dans l'eau.

2. Composition pour former la base de placage selon la revendication 1, comprenant en outre : (D) une résine liante.

3. Composition pour former la base de placage selon la revendication 1 ou 2, dans laquelle les nanoparticules inorganiques comprennent au moins une espèce d'élément ou d'alliage métallique ou un composé formé d'au moins une espèce d'élément et/ou alliage métallique choisie dans un groupe consistant en Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po et At.

4. Composition pour former la base de placage selon l'une quelconque des revendications 1 à 3, dans laquelle ledit solvant et/ou agent dispersant aqueux ou soluble dans l'eau comprend au moins un choisi dans un groupe consistant en eau, et un solvant organique miscible avec l'eau.

5. Composition pour former la base de placage selon la revendication 2, dans laquelle ladite résine liante comprend au moins une ou deux ou plusieurs espèces choisies dans un groupe consistant en résine acrylique, polyester, résine polyuréthane-polyéthylène, polypropylène, polystyrène, polyvinylpyrrolidone, polyéthylène glycol, polyamide, polyépoxyde, alcool polyvinylique, polysaccharides, et protéine.

6. Couche mince pour une base de placage, attachée à un substrat prédéterminé, dans laquelle la couche comprend
(A) des nanoparticules inorganiques étant en au moins une ou deux ou plusieurs espèces de substances choisies dans un groupe consistant en métal, substance semi-conductrice, et oxyde métallique, dans laquelle des nanoparticules inorganiques présentent un diamètre moyen de particules de 1 nm à 500 nm tel que mesuré selon la méthode de JIS H7804:2005 ou JIS Z 8827-1:2008, et
(B) au moins une ou deux ou plusieurs espèces de ligands pi-conjugués organiques comprenant au moins l'un choisi dans un groupe consistant en 2,11,20,29-tétrakis(carboxy)phtalocyanine (TCAP), 2,11,20,29-tétrakis-(carboxy)naphtalocyanine (TCAN) et 2,3,11,12,20,21,29,30-octakis(carboxy)phtalocyanine (OCAP),
dans laquelle lesdites nanoparticules inorganiques et lesdits ligands pi-conjugués organiques sont sensiblement dans un état mélangé de façon homogène dans ladite couche.

7. Couche mince pour la base de placage selon la revendication 6, comprenant en outre :
(C) un solvant et/ou agent dispersant aqueux ou soluble dans l'eau au plus dans une telle mesure que la couche mince est reconnue comme un corps solide et présente une conductivité électronique.

8. Couche mince pour la base de placage selon la revendication 6 ou 7, comprenant en outre :
(D) une résine liante.

9. Couche mince pour la base de placage selon l'une quelconque des revendications 6 à 8, dans laquelle lesdites nanoparticules inorganiques comprennent au moins une espèce d'élément ou un alliage métallique ou un composé formé d'au moins une espèce d'élément et/ou d'alliage métallique choisie dans un groupe consistant en Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po et At.

10. Couche mince pour la base de placage selon l'une quelconque des revendications 7 à 9, dans laquelle ledit solvant et/ou agent dispersant aqueux ou soluble dans l'eau comprend au moins un choisi dans un groupe consistant en eau, et un solvant organique miscible avec l'eau.

11. Couche mince pour la base de placage selon la revendication 8, dans laquelle ladite résine liante comprend au moins une ou deux ou plusieurs espèces choisies dans un groupe consistant en résine acrylique, polyester, résine polyuréthane-polyéthylène, polypropylène, polystyrène, polyvinylpyrrolidone, polyéthylène glycol, polyamide, polyépoxyde, alcool polyvinylique, polysaccharides, et protéine.

12. Couche mince pour la base de placage selon l'une quelconque des revendications 6 à 11, dans laquelle des surfaces des nanoparticules inorganiques sont au moins partiellement exposées de la surface externe de la couche mince.

13. Procédé pour former une couche de revêtement métallique sur la couche mince selon l'une quelconque des revendications 6 à 12, comprenant l'étape consistant à :
appliquer un placage électrolytique ou un dépôt autocatalytique sur ladite couche mince, dans lequel la couche de revêtement métallique susmentionnée peut comprendre au moins une ou deux ou plusieurs espèces d'élément ou un alliage métallique et/ou un composé comprenant au moins une ou deux ou plusieurs espèces d'éléments choisis dans un groupe consistant en cuivre, nickel, étain, chrome, zinc, or, argent, platine, rhodium, et palladium.
